(19)

Europäisches
Patentamt

European
Patent Office

Office européen
des brevets

(11)  **EP 4 530 666 A1**

(12)  # EUROPEAN PATENT APPLICATION

(43) Date of publication:
**02.04.2025  Bulletin 2025/14**

(21) Application number: **23200922.5**

(22) Date of filing: **29.09.2023**

(51) International Patent Classification (IPC):
**G01S 7/481** *(2006.01)*       **G06V 10/145** *(2022.01)*
**G01B 11/25** *(2006.01)*

(52) Cooperative Patent Classification (CPC):
**G06V 10/145; G01S 7/4815;** G01B 11/25

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **trinamiX GmbH**
**67063 Ludwigshafen am Rhein (DE)**

(72) Inventors:
• **Koloczek, Jan David Alexander**
  **67063 Ludwigshafen am Rheim (DE)**

• **Schindler, Patrick**
  **67063 Ludwigshafen am Rheim (DE)**
• **Gloor, Matthias**
  **4057 Basel (CH)**
• **Berner, Nils**
  **69151 Neckargemuend (DE)**
• **Lennartz, Christian**
  **67063 Ludwigshafen am Rheim (DE)**

(74) Representative: **Altmann Stößel Dick**
**Patentanwälte PartG mbB**
**Theodor-Heuss-Anlage 2**
**68165 Mannheim (DE)**

(54)    **2IN1 PROJECTOR WITH POLARIZED VCSELS AND BEAM SPLITTER**

(57)    An optoelectronic apparatus (112) configured for emitting at least one infrared light pattern comprising a plurality of infrared light beams and for emitting infrared flood light is proposed, comprising:
- at least one refractive and/or diffractive optical element (114);
- at least one polarization-sensitive beam splitter (116);
- at least one light emitter structure (118) comprising at least one first array (120) of light emitters and at least one second array (122) of light emitters, wherein the first array (120) is configured for emitting light with a first polarization and the second array (122) is configured for emitting light with a second polarization, different from the first polarization,
- at least two illumination paths comprising a light pattern illumination path and a flood light illumination path,

wherein the light pattern illumination path comprises a pattern light source (124) comprising one of the first array (120) or the second array (122), wherein the pattern light source (124) is arranged at a back focal length of the optical element (114), wherein the optical element (114) is configured for collimating and/or replicating light from the pattern light source (124), thereby forming the pattern light source (124) configured for emitting the infrared light pattern,
wherein the flood light illumination paths comprises a flood light source (126) comprising the other one of the first array (120) or the second array (122), wherein the flood light source (126) is arranged with an offset to the back focal length of the optical element (114), wherein the optical element (114) is configured for defocusing light from the flood light source (126), thereby forming the flood light source configured for emitting the infrared flood light,
wherein a reflection plane of the beam splitter (116) is oriented such that light emitted from one of the pattern light source (124) or the flood light source (126) passes through the beam splitter (116) unaltered to the optical element (114) and that light emitted from the other one of the pattern light source (124) or the flood light source (126) gets reflected towards the optical element (114).

FIG.3A

EP 4 530 666 A1

**(Cont. next page)**

# FIG.3B

**Description**

Technical Field

The invention relates to an optoelectronic apparatus, use of the optoelectronic apparatus, a device for authenticating a user, and a method for authenticating a user of a device. The present invention further relates to a computer program, a computer-readable storage medium and a non-transient computer-readable medium. The devices, methods and uses according to the present invention specifically may be employed for example in various areas of daily life, security technology, gaming, traffic technology, production technology, photography such as digital photography or video photography for arts, documentation or technical purposes, safety technology, information technology, agriculture, crop protection, maintenance, cosmetics, medical technology or in the sciences. However, other applications are also possible.

Background art

Available authentication systems in mobile devices such as in smartphones, tablets and the like, include cameras. Said mobile devices usually have a front display such as an organic light-emitting diode (OLED) area. For the integration of a camera, a cutout of the display at the position of the camera is required. These cutouts decrease an available display area, the so-called notch, and thus, the display area available to the user. Thus, it would be desirable to have secure biometric face authentication operating behind a display panel without being visible (avoid a notch, punchhole etc.) to maximize the accessible display area. The use of OLED displays offers the possibility to achieve the operation behind display by introducing semitransparent areas into the display. Then the optical components such as light projectors and cameras can be placed behind these semitransparent areas. However, number and size of these transparent areas needs to be limited to the smallest possible number to maintain homogeneous display appearance. For example the standard components for an face authentication solution involving 3D and/or material detection involve a flood projector, a dot projector and a camera. A combination of flood and dot projector into one housing (2-1 concept) behind a single semitransparent area would reduce the necessary number of semitransparent areas from 3 to 2.

A common way to get an integrated projector solution (2-1 concept) is to place two VCSEL arrays next to each other, one VCSEL serving the flood illumination task, the other serving the dot projection task. To obtain a dot projection the dot projection VCSEL will be placed into the focal plane of the projector optics to enable sharp projection. To obtain a flood projection the flood projection VCSEL will be placed out of focus of the projector optics to blur the dots to such an extent, that a homogenous superposition of the spot images appears in object space. The disadvantage of the above concept may be twofold: Since both VCSELs will have an offset with respect to the optical axis of the system their field of Illumination will not coincide. To correct for the offset an additional optical element like a DOE has to be used. Two independent VCSELs result in a large emissive area which will require a large transparent area to deal with the large optical aperture of such a projector.

Thus, despite the above-mentioned achievements there is still a need to generate a dot pattern as well as a diffuse illumination with only one projector, in particular in order to save space and cost in hardware and reduce the number of semi-transparent display holes. Otherwise, a projector for the dot pattern and a flood projector for the diffuse illumination must be installed, with the above-listed disadvantages.

Problem to be solved

It is therefore an object of the present invention to provide devices and methods facing the above-mentioned technical challenges of known devices and methods. Specifically, it is an object of the present invention to provide devices and methods, which allow for generating a dot pattern as well as a diffuse illumination with only one projector.

Summary

This problem is addressed by an optoelectronic apparatus, use of the optoelectronic apparatus, a device for authenticating a user, a method for authenticating a user of a device, a computer program, a computer-readable storage medium and a non-transient computer-readable medium with the features of the independent claims. Advantageous embodiments which might be realized in an isolated fashion or in any arbitrary combinations are listed in the dependent claims as well as throughout the specification.

In a first aspect, an optoelectronic apparatus is disclosed. The optoelectronic apparatus is configured for emitting at least one infrared light pattern comprising a plurality of infrared light beams and for emitting infrared flood light.

The optoelectronic apparatus comprises:

- at least one refractive and/or diffractive optical element;
- at least one polarization-sensitive beam splitter;
- at least one light emitter structure comprising at least one first array of light emitters and at least one second array of light emitters, wherein the first array is configured for emitting light with a first polarization and the second array is configured for emitting light with a second polarization, different from the first polarization,
- at least two illumination paths comprising a light pattern illumination path and a flood light illumination path,

> wherein the light pattern illumination path comprises a pattern light source comprising one of the first array or the second array, wherein the pattern light source is arranged at a back focal length of the optical element, wherein the optical element is configured for collimating and/or replicating light from the pattern light source, thereby forming the pattern light source configured for emitting the infrared light pattern,
> wherein the flood light illumination paths comprises a flood light source comprising the other one of the first array or the second array, wherein the flood light source is arranged with an offset to the back focal length of the optical element, wherein the optical element is configured for defocusing light from the flood light source, thereby forming the flood light source configured for emitting the infrared flood light,
> wherein a reflection plane of the beam splitter is oriented such that light emitted from one of the pattern light source or the flood light source passes through the beam splitter unaltered to the optical element and that light emitted from the other one of the pattern light source or the flood light source gets reflected towards the optical element.

The term "optoelectronic apparatus" as used herein is a broad term and is to be given its ordinary and customary meaning to a person of ordinary skill in the art and is not to be limited to a special or customized meaning. The term specifically may refer, without limitation, to a device or system operating on light and electrical currents.

The term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 $\mu$m, wherein the range of 760 nm to 1.5 $\mu$m is usually denominated as "near infrared spectral range" (NIR) while the range from 1.5 $\mu$ to 15 $\mu$m is denoted as "mid infrared spectral range" (MidIR) and the range from 15 $\mu$m to 1000 $\mu$m as "far infrared spectral range" (FIR). Preferably, light used for the typical purposes of the present invention is light in the infrared (IR) spectral range, more preferred, in the near infrared (NIR) and/or the mid infrared spectral range (MidIR), especially the light having a wavelength of 1 $\mu$m to 5 $\mu$m, preferably of 1 $\mu$m to 3 $\mu$m.

The optoelectronic apparatus may be configured for emitting light at a single wavelength, e.g. in the near infrared region. In other embodiments, the optoelectronic apparatus may be adapted to emit light with a plurality of wavelengths, e.g. for allowing additional measurements in other wavelengths channels.

The term "ray" as used herein is a broad term and is to be given its ordinary and customary meaning to a person of ordinary skill in the art and is not to be limited to a special or customized meaning. The term specifically may refer, without limitation, to a line that is perpendicular to wavefronts of light which points in a direction of energy flow. The term "light beam" as used herein is a broad term and is to be given its ordinary and customary meaning to a person of ordinary skill in the art and is not to be limited to a special or customized meaning. The term specifically may refer, without limitation, to a collection of rays. In the following, the terms "ray" and "beam" will be used as synonyms. The term "light beam" as used herein is a broad term and is to be given its ordinary and customary meaning to a person of ordinary skill in the art and is not to be limited to a special or customized meaning. The term specifically may refer, without limitation, to an amount of light, specifically an amount of light traveling essentially in the same direction, including the possibility of the light beam having a spreading angle or widening angle.

The term "light pattern" as used herein is a broad term and is to be given its ordinary and customary meaning to a person of ordinary skill in the art and is not to be limited to a special or customized meaning. The term specifically may refer, without limitation, to at least one arbitrary pattern comprising a plurality of light beams of in particular coherent electromagnetic radiation, e.g. at least two light beams, preferably at least two light beams. The light pattern may be projected onto a user and/or an object. Projection of a light beam of the light pattern onto a surface may result in a light spot. A light beam may illuminate at least a part of the surface. A light spot may refer to a contiguous area of coherent electromagnetic radiation on at least a part of the surface. A light spot may refer to an arbitrarily shaped spot of coherent electromagnetic radiation. A light spot may be a result of the projection of a light beam associated with the light pattern. The light spot may be at least partially spatially extended. The emitted light pattern may illuminate the surface by a light pattern comprising a plurality of light spots. The light spots may be overlapping at least partially. For example, the number of light spots may be equal to the number of light beams associated with the emitted light pattern. The intensity associated with a light spot may be substantially similar. Substantially similar may refer to intensity values associated with the light spot may differ by less than 50%, preferably less than 30%, more preferably less than 20%. Using patterned light may be advantageous since it can enable the sparing of light-sensitive regions such as the eyes.

The term "infrared light pattern" as used herein is a broad term and is to be given its ordinary and customary meaning to a person of ordinary skill in the art and is not to be limited to a special or customized meaning. The term specifically may refer, without limitation, to a light pattern comprising light beams in the infrared spectral range. The infrared light pattern may have a wavelength from 760 nm to 1.5 $\mu$m, preferably 940 nm, 1140 nm or 1320 to 1380 nm. Other light patterns with a wavelength >1400 nm are possible, too.

The infrared light pattern may be coherent. The infrared light pattern may be a coherent infrared light pattern. The term "coherent" electromagnetic radiation as used herein is a broad term and is to be given its ordinary and customary meaning to a person of ordinary skill in the art and is not to be limited to a special or customized meaning. The term specifically may refer, without limitation, to light pattern and/or a plurality of light beams that have at least essentially a fixed phase relationship between electric field values at different locations and/or at different times. In particular, the coherent electromagnetic radiation may refer to electromagnetic radiation that is able to exhibit interference effects. The term "coherent" may also comprise partial coherence, i.e. a non-perfect correlation between phase values. The electromagnetic radiation may be completely coherent, wherein deviations of about ± 10% of phase relationship are possible.

The infrared light pattern may comprise at least one point pattern.

The term "flood light" as used herein, is a broad term and is to be given its ordinary and customary meaning to a person of ordinary skill in the art and is not to be limited to a special or customized meaning. The term specifically may refer, without limitation, to substantially continuous spatial illumination, in particular diffuse and/or uniform illumination. The flood light has a wavelength in the infrared range, in particular in the near infrared range. The term "substantially continuous spatial illumination" as used herein is a broad term and is to be given its ordinary and customary meaning to a person of ordinary skill in the art and is not to be limited to a special or customized meaning. The term specifically may refer, without limitation, to uniform spatial illumination, wherein areas of non-uniform are possible. The area, e.g. covering a user, a portion of the user and/or a face of the user, illuminated by the flood light, may be contiguous. Power may be spread over a whole field of illumination. In contrast, illumination provided by the light pattern may comprise at least two contiguous areas, in particular a plurality of contiguous areas, and/or power may be concentrated in small (compared to the whole field of illumination) areas of the field of illumination. The infrared flood illumination may be suitable for illuminating a contiguous area, in particular one contiguous area. The infrared pattern illumination may be suitable for illuminating at least two contiguous areas. The flood light source may illuminate a measurement area, such as a user, a portion of the user and/or a face of the user, with a substantially constant illumination intensity. The term "constant" as used herein, is a broad term and is to be given its ordinary and customary meaning to a person of ordinary skill in the art and is not to be limited to a special or customized meaning. The term specifically may refer, without limitation, to a time aspect during an exposure time. The flood light may vary temporally and/or may be substantially constant over time. The term "substantially constant" as used herein, is a broad term and is to be given its ordinary and customary meaning to a person of ordinary skill in the art and is not to be limited to a special or customized meaning. The term specifically may refer, without limitation, to a completely constant illumination and embodiments in which deviations from a constant illumination of $\leq \pm$ 10 %, preferably $\leq \pm$ 5 %, more preferably $\leq \pm$ 2 % are possible.

The term "infrared flood light" as used herein is a broad term and is to be given its ordinary and customary meaning to a person of ordinary skill in the art and is not to be limited to a special or customized meaning. The term specifically may refer, without limitation, to flood light in the infrared spectral range. The infrared flood light may have a wavelength from 760 nm to 1.5 $\mu$m, preferably 940 nm, 1140 nm or 1320 to 1380 nm. Other wavelengths ranges e.g. >1400 nm, are possible, too.

The term "refractive and/or diffractive optical element" as used herein is a broad term and is to be given its ordinary and customary meaning to a person of ordinary skill in the art and is not to be limited to a special or customized meaning. The term specifically may refer, without limitation, to an arbitrary optical element having refractive properties and/or diffractive properties. The term "refractive optical element" as used herein is a broad term and is to be given its ordinary and customary meaning to a person of ordinary skill in the art and is not to be limited to a special or customized meaning. The term specifically may refer, without limitation, to an optical element configured for influencing impinging light beams by means of refraction. The term "diffractive optical element" as used herein is a broad term and is to be given its ordinary and customary meaning to a person of ordinary skill in the art and is not to be limited to a special or customized meaning. The term specifically may refer, without limitation, to an optical element configured for influencing impinging light beams by means of diffraction. The optical element may comprise one or more of at least one refractive lens, at least one system of refractive lenses, at least one diffractive optical element (DOE), at least one meta lens. For example, the optical element may be at least one projector lens, e.g. a single projector lens or a lens system, e.g. a projector optics. The optical element may comprise at least one refractive optical element, or at least one diffractive optical element or at least one diffractive element in combination with a refractive optical element or it could be an integrated diffractive-refractive optical element. At least one microlens array may also be a possible choice.

The optical element is configured for collimating and/or replicating light.

The term "collimating" as used herein is a broad term and is to be given its ordinary and customary meaning to a person of ordinary skill in the art and is not to be limited to a special or customized meaning. The term specifically may refer, without limitation, to aligning a direction of motion of impinging, e.g. diverging, light beams into parallel rays. An effective optical path length of one of the first or the second array to the optical element may be chosen to match the back focal length of the optical element, to collimate the array cavities and producing a the light pattern. The optical element may have a back side facing one of the arrays of light emitters and an opposing front side facing away from said array. The term "back focal length", as used herein is a broad term and is to be given its ordinary and customary meaning to a person of ordinary skill in the art and is not to be limited to a special or customized meaning. The term specifically may refer, without limitation, to a distance between the first surface at the back side of the optical element, on which the light beams generated from the respective array having passed the beam splitter impinge, and a focal plane at the back side of the optical element. The effective optical path length of the other array to the optical element may be chosen with an offset to the back focal length of the optical element, producing a flood illumination by defocusing. Both the arrays can fulfill either role by switching the distances of the optical path.

The term "replicating" as used herein is a broad term and is to be given its ordinary and customary meaning to a person of ordinary skill in the art and is not to be limited to a special or customized meaning. The term specifically may refer, without limitation, to increasing, e.g. duplicating, the number of spots, e.g. the spots generated by the light emitters. The optical element may comprise at least one diffractive optical element (DOE) and/or at least one metasurface element. The DOE and/or the metasurface element may be configured for generating multiple light beams from a single incoming light beam. For example, a VCSEL projecting up to 2000 spots and an optical element comprising a plurality of metasurface elements may be used to duplicate the number of spots. Further arrangements, particularly comprising a different number of projecting VCSEL and/or at least one different optical element configured for increasing the number of spots may be possible. Other multiplication factors are possible. For example, a VCSEL or a plurality of VCSELs may be used and the generated laser spots may be duplicated by using at least one DOE.

The term "beam splitter" as used herein is a broad term and is to be given its ordinary and customary meaning to a person of ordinary skill in the art and is not to be limited to a special or customized meaning. The term specifically may refer, without limitation, to an optical device configured for splitting incident light at a designated ratio into a transmitted and a reflected beam. The term "polarization-sensitive beam splitter" as used herein is a broad term and is to be given its ordinary and customary meaning to a person of ordinary skill in the art and is not to be limited to a special or customized meaning. The term specifically may refer, without limitation, to a beam splitter splitting the incident light with respect to its polarization. For example, the polarization-sensitive beam splitter may be configured for transmitting light of a first polarization and for reflecting light having a second polarization, different from the first polarization. The beam splitter may be cube beam splitter or plate beam splitter. The beam splitter has a reflection plane. The term "reflection plane" as used herein is a broad term and is to be given its ordinary and customary meaning to a person of ordinary skill in the art and is not to be limited to a special or customized meaning. The term specifically may refer, without limitation, to a surface of the beam splitter at which the incident light is reflected. The reflection plane of the beam splitter is oriented such that light emitted from one of the pattern light source or the flood light source passes through the beam splitter unaltered to the optical element and that light emitted from the other one of the pattern light source or the flood light source gets reflected towards the optical element.

The term "light emitter structure" as used herein, is a broad term and is to be given its ordinary and customary meaning to a person of ordinary skill in the art and is not to be limited to a special or customized meaning. The term specifically may refer, without limitation, to an assembly of light emitters. The light emitter structure comprises a plurality of light emitters. The term "light emitter", also abbreviated as emitter, as used herein is a broad term and is to be given its ordinary and customary meaning to a person of ordinary skill in the art and is not to be limited to a special or customized meaning. The term specifically may refer, without limitation, to at least one arbitrary device configured for providing at least one light beam. The emitter may comprise at least one vertical cavity surface emitting laser (VCSEL). The term "vertical-cavity surface-emitting laser" as used herein is a broad term and is to be given its ordinary and customary meaning to a person of ordinary skill in the art and is not to be limited to a special or customized meaning. The term specifically may refer, without limitation, to a semiconductor laser diode configured for laser beam emission perpendicular with respect to a top surface. Examples for VCSELs can be found e.g. in en.wikipedia.org/wiki/Verticalcavity_surface-emitting_laser. The light emitters may be configured for emitting light in the near infrared spectral range, preferably a wavelength of the emitted light is from 760 nm to 1.5 $\mu$m, preferably 940 nm, 1140 nm or 1320 to 1380 nm.

The array of emitters may be a two-dimensional or one dimensional array. The array may comprise a plurality of emitters arranged in a matrix. The light emitters of the respective arrays may be arranged in a one dimensional, e.g. row, array, or a two dimensional array, in particular in a matrix having m rows and n columns, with m, n, independently, being positive integers. The term "matrix" as used herein is a broad term and is to be given its ordinary and customary meaning to a person of ordinary skill in the art and is not to be limited to a special or customized meaning. The term specifically may refer, without limitation, to an arrangement of a plurality of elements in a predetermined geometrical order. The matrix specifically may be or may comprise a rectangular matrix having one or more rows and one or more columns. The rows and columns specifically may be arranged in a rectangular fashion. However, other arrangements are feasible, such as nonrectangular arrangements. The light emitters may be arranged such that the infrared light pattern is a hexagonal pattern. Thus, for example, the matrix may be a hexagonal matrix.

The terms "first" and "second", are used purely as names and in particular do not give any information about an order and/or about whether, for example, other elements are present.

The first array is configured for emitting light with a first polarization and the second array is configured for emitting light with a second polarization, different from the first polarization. For example, the light emitters are polarized emitters configured for emitting polarized light. The term "polarized emitter" as used herein is a broad term and is to be given its ordinary and customary meaning to a person of ordinary skill in the art and is not to be limited to a special or customized meaning. The term specifically may refer, without limitation, to an emitter configured for emitting s- or p-polarized light. The polarized emitter may itself be polarized or may comprise at least one polarization filter. The term "polarization filter", also denoted as polarizer, as used herein is a broad term and is to be given its ordinary and customary meaning to a person of ordinary skill in the art and is not to be limited to a special or customized meaning. The term specifically may refer, without limitation, to an optical filter element configured for allowing pass through of light having a specific polarization and blocking light of other polarizations. Thus, the polarization filter may be configured for generating polarized light from light of undefined or mixed polarization. The polarization filter may comprise at least one linear polarizer and/or at least one circular polarizer. The polarization filter may be configured for separating vertically polarized (s-polarized) from horizontally polarized (p-polarized) light. For example, a multi-element light source with individual emission elements may be used with different polarizations which may be turned on and off individually. All light emitter cavities of one array may emit with the same polarization.

The first array of light emitters may arranged on a first base. The second array of light emitters may be arranged on a second base. The term "base" as used herein, is a broad term and is to be given its ordinary and customary meaning to a person of ordinary skill in the art and is not to be limited to a special or customized meaning. The term specifically may refer, without limitation, to a carrier on which at least one further element, in particular the array of light emitters, can be mounted. The base may comprise a plurality of cavities into which the light emitters can be mounted. The base may have an arbitrary shape such as a rectangular, a circular, a hexagonal shape. The shape may refer to a side of the base oriented perpendicular to the direction in which height is measured. The base may comprise at least one semiconductor substrate. The base may be an element of the light emitter structure and/or an additional element. The base may be and/or may comprise a thermally conducting printed circuit board (PCB).

The light emitters may form a chip of light emitters, e.g. a VCSEL die, e.g. as sawn out of a wafer. Such a chip of light emitters may be mounted on the respective base, e.g. by using at least one heat conductive adhesive. The base may comprise at least one thermally conducting material. The base can be the bottom of the optoelectronic apparatus, e.g. of a housing of the optoelectronic apparatus. Alternatively, the base and the housing may be separate elements. For example, the chip of light emitters may be mounted, e.g. by using at least one heat conductive adhesive, on the base, e.g. the PCB, and the housing may be applied to this combined element.

The base may comprise at least one thermally conducting material, in particular thermally conducting materials. The thermally conducting material may be configured as a heat exchanger. The thermally conducting material may be configured for regulating the temperature of the light emitter. The thermally conducting material may be configured for transferring heat generated by a light emitter away from the light emitter. For example, the thermally conducting material may comprise at least one composite material. For example, the thermally conducting material may comprise a first material in a first region closer to the light emitter having greater thermal conductivity than in a second, peripheral region surrounding the first region. The light emitter structure may be mounted on the thermally conducting material.

The optoelectronic apparatus comprises at least two illumination paths comprising a light pattern illumination path and a flood light illumination path. The term "illuminate", as used herein, is a broad term and is to be given its ordinary and customary meaning to a person of ordinary skill in the art and is not to be limited to a special or customized meaning. The term specifically may refer, without limitation, to the process of exposing at least one element to light. The term "illumination path" as used herein is a broad term and is to be given its ordinary and customary meaning to a person of ordinary skill in the art and is not to be limited to a special or customized meaning. The term specifically may refer, without limitation, to a trajectory of light in the optoelectronic apparatus before exiting the optoelectronic apparatus, e.g. via at least one object interface. The term "object interface" as used herein is a broad term and is to be given its ordinary and customary meaning to a person of ordinary skill in the art and is not to be limited to a special or customized meaning. The term specifically may refer, without limitation, to a port through which light may leave the optoelectronic apparatus, e.g. for the purpose of illuminating at least one object.

The term "light pattern illumination path" as used herein is a broad term and is to be given its ordinary and customary meaning to a person of ordinary skill in the art and is not to be limited to a special or customized meaning. The term specifically may refer, without limitation, to an illumination path providing the light pattern. The term "flood light illumination path" as used herein is a broad term and is to be given its ordinary and customary meaning to a person of ordinary skill in the art and is not to be limited to a special or customized meaning. The term specifically may refer, without limitation, to an illumination path providing the flood light.

The light pattern illumination path comprises a pattern light source comprising one of the first array or the second array. The term "light source" as used herein is a broad term and is to be given its ordinary and customary meaning to a person of ordinary skill in the art and is not to be limited to a special or customized meaning. The term specifically may refer, without limitation, to an arbitrary device configured for generating or providing light in the sense of the above-mentioned definition. The term "pattern light source" as used herein is a broad term and is to be given its ordinary and customary meaning to a person of ordinary skill in the art and is not to be limited to a special or customized meaning. The term specifically may refer, without limitation, to an arbitrary device configured for generating or providing at least one light pattern, in particular at least one infrared light pattern. The pattern light source is arranged at a back focal length of the optical element. The optical element is configured for collimating and/or replicating light from the pattern light source, thereby forming the pattern light source configured for emitting the infrared light pattern.

The flood light illumination paths comprises a flood light source comprising the other one of the first array or the second array. The term "flood light source" as used herein is a broad term and is to be given its ordinary and customary meaning to a person of ordinary skill in the art and is not to be limited to a special or customized meaning. The term specifically may refer, without limitation, to at least one arbitrary device configured for providing flood light. The flood light source is arranged with an offset to the back focal length of the optical element. The optical element is configured for defocusing light from the flood light source, thereby forming the flood light source configured for emitting the infrared flood light.

As outlined above, the first array may be mounted on a first base and the second array may be mounted on a second base. The second base may be tilted with respect to the first base. For example, an angle between the first base and the second base may be from 20° to 90°. However, other angles are possible. For example, the first array is oriented in direction of an optical axis of the optical element and the second array is oriented perpendicular to the first array. Thus, for example, the first array may be a horizontal array and the second array may be a vertical array. Both the horizontal and the vertical array can fulfill either role by switching the distances of the optical path.

The optoelectronic apparatus may be comprised in a device. The device may be selected from the group consisting of: a television device; a game console; a personal computer; a mobile device, particularly a cell phone, and/or a smart phone, and/or, and/or a tablet computer, and/or a laptop, and/or a tablet, and/or a virtual reality device, and/or a wearable, such as a smart watch; or another type of portable computer; at least one access control device such as a kiosk, a door access device, a car access device; at least one in-car display.

The device may comprise a display and the infrared light pattern traverses the display while being illuminated from the pattern light source and/or the infrared flood light traverses the display while being illuminated from the flood light source. The term "display" as used herein is a broad term and is to be given its ordinary and customary meaning to a person of ordinary skill in the art and is not to be limited to a special or customized meaning. The term specifically may refer, without limitation, to an arbitrary shaped device configured for displaying an item of information. The item of information may be arbitrary information such as at least one image, at least one diagram, at least one histogram, at least one graphic, text, numbers, at least one sign, an operating menu, and the like. The display may be or may comprise at least one screen. The display may have an arbitrary shape, e.g. a rectangular shape. The display may be a front display of the device. The display may be or may comprise at least one organic light-emitting diode (OLED) display. As used herein, the term "organic light emitting diode" is a broad term and is to be given its ordinary and customary meaning to a person of ordinary skill in the art and is not to be limited to a special or customized meaning. The term specifically may refer, without limitation, to a light-emitting diode (LED) in which an emissive electroluminescent layer is a film of organic compound configured for emitting light in response to an electric current. The OLED display may be configured for emitting visible light.

The display, particularly a display area, may be made of and/or may be covered by glass. In particular, the display may comprise at least one glass cover.

The display is at least partially transparent. The term "at least partially transparent" as used herein is a broad term and is to be given its ordinary and customary meaning to a person of ordinary skill in the art and is not to be limited to a special or customized meaning. The term specifically may refer, without limitation, to a property of the display to allow light, in particular of a certain wavelength range, e.g. in the infrared spectral region, in particular in the near infrared spectral region, to pass at least partially through. For example, the display may be semi-transparent in the near infrared region. For example, the display may have a transparency of 20 % to 50 % in the near infrared region. The display may have a different transparency for other wavelength ranges. The present invention may propose an optoelectronic apparatus comprising the image generation unit and two light sources that can be placed behind the display of a device. The transparent area(s) of the display can allow for operation of the optoelectronic apparatus behind the display. The display is an at least partially transparent display, as described above. The display may have a reduced pixel density and/or a reduced pixel size and/or may comprise at least one transparent conducting path. The transparent area(s) of the display may have a pixel density of 360-440 PPI (pixels per inch). Other areas of the display, e.g. non-transparent areas, may have pixels densities higher than 400 PPI, e.g. a pixel density of 460-500 PPI.

The display may comprise a display area. The term "display area" as used herein is a broad term and is to be given its ordinary and customary meaning to a person of ordinary skill in the art and is not to be limited to a special or customized meaning. The term specifically may refer, without limitation, to an active area of the display, in particular an area which is activatable. The display may have additional areas such as recesses or cutouts. The display may be at least partially transparent in at least one continuous area, preferably in at least two continuous areas. At least one of the continuous areas covers the image generation unit and/or the pattern light source and/or the flood light source at least partially. The pattern light source, the flood light source and the image generation unit may be placed in a direction of propagation of the infrared light pattern in front of the display.

The display may have a first area associated with a first pixel density (Pixels per inch (PPI)) value and a second area associated with a second pixel density value. The first pixel density value may be lower than the second pixel density value. The first pixel density value may be equal to or below 450 PPI, preferably from 300 to 440 PPI, more preferably 350 to 450 PPI. The second pixel density value may be 400 to 500 PPI, preferably 450 to 500 PPI. The first pixel density value may be associated with the at least one continuous area being at least partially transparent.

The device may comprise at least one image generation unit configured for generating at least one pattern image while the pattern light source is emitting the infrared light pattern and configured for generating at least one flood image while the flood light source is emitting infrared flood light.

The term "image generation unit" as used herein is a broad term and is to be given its ordinary and customary meaning to a person of ordinary skill in the art and is not to be limited to a special or customized meaning. The term specifically may refer, without limitation, to at least one unit of the optoelectronic apparatus configured for generating at least one image. The image may be generated via a hardware and/or a software interface, which may be considered as the image generation unit. The term "image generation" as used herein is a broad term and is to be given its ordinary and customary meaning to a person of ordinary skill in the art and is not to be limited to a special or customized meaning. The term specifically may refer, without limitation, to capturing and/or generating and/or determining and/or recording at least one image by using the image generation unit. The image generation may comprise imaging and/or recording the image. The image generation may comprise capturing a single image and/or a plurality of images such as a sequence of images. For generating an image via a hardware and/or a software interface, the capturing and/or generating and/or determining and/or recording of the image may be caused and/or initiated by the hardware and/or the software interface. For example, the image generation may comprise recording continuously a sequence of images such as a video or a movie. The image generation may be initiated by a user action or may automatically be initiated, e.g. once the presence of at least one object or user within a field of view and/or within a predetermined sector of the field of view of the image generation unit is automatically detected.

The image generation unit may comprise at least one optical sensor, in particular at least one pixelated optical sensor. The image generation unit may comprise at least one CMOS sensor or at least one CCD chip. For example, the image generation unit may comprise at least one CMOS sensor, which may be sensitive in the infrared spectral range. The term "image" as used herein is a broad term and is to be given its ordinary and customary meaning to a person of ordinary skill in the art and is not to be limited to a special or customized meaning. The term specifically may refer, without limitation, to data recorded by using the optical sensor, such as a plurality of electronic readings from the CMOS or CCD chip. The image may comprise raw image data or may be a pre-processed image. For example, the pre-processing may comprise applying at least one filter to the raw image data and/or at least one background correction and/or at least one background subtraction.

For example, the image generation unit may comprise one or more of at least one monochrome camera e.g. comprising monochrome pixels, at least one color (e.g. RGB) camera e.g. comprising color pixels, at least one IR camera. The camera may be a CMOS camera. The camera may comprise at least one monochrome camera chip, e.g. a CMOS chip. The camera may comprise at least one color camera chip, e.g. an RGB CMOS chip. The camera may comprise at least one IR camera chip, e.g. an IR CMOS chip. For example, the camera may comprise monochrome, e.g. black and white, pixels and color pixels. The color pixels and the monochrome pixels may be combined internally in the camera. The camera generally may comprise a one-dimensional or two-dimensional array of image sensors, such as pixels.

As outlined, above, the image generation unit may be at least one camera. For example, the camera may be an internal and/or external camera of a device comprising the optoelectronic apparatus. As described in the above, the internal and/or external camera of the device may be accessed via a hardware and/or a software interface comprised by the optoelectronic apparatus, which is used as the image generation unit. In case, the device is or comprises a smartphone the image generating unit may be a front camera, such as a selfie camera, and/or back camera of the smartphone.

The image generation unit may have a field of view between 10°x10° and 75°x75°, preferably 55°x65°. The image generation unit may have a resolution below 2 MP, preferably between 0.3 MP and 1.5 MP.

The image generation unit may comprise further elements, such as one or more optical elements, e.g. one or more lenses. As an example, the optical sensor may be a fix-focus camera, having at least one lens which is fixedly adjusted with respect to the camera. Alternatively, however, the camera may also comprise one or more variable lenses which may be adjusted, automatically or manually. The camera may comprise at least one optical filter, e.g. at least one bandpass filter. The bandpass filter may be matched to the spectrum of the light emitters. Other cameras, however, are feasible.

The term "pattern image" as used herein is a broad term and is to be given its ordinary and customary meaning to a person of ordinary skill in the art and is not to be limited to a special or customized meaning. The term specifically may refer, without limitation, to an image generated by the image generation unit while illuminating with the infrared light pattern, e.g. on an object and/or a user. The pattern image may comprise an image showing a user, in particular at least parts of the face of the user, while the user is being illuminated with the infrared light pattern, particularly on a respective area of interest comprised by the image. The pattern image may be generated by imaging and/or recording light reflected by an object and/or user, which is illuminated by the infrared light pattern. The pattern image showing the user may comprise at least a portion of the illuminated infrared light pattern on at least a portion the user. For example, the illumination by the pattern light source and the imaging by using the optical sensor may be synchronized, e.g. by using at least one control unit of the optoelectronic apparatus.

The term "flood image" as used herein is a broad term and is to be given its ordinary and customary meaning to a person of ordinary skill in the art and is not to be limited to a special or customized meaning. The term specifically may refer, without limitation, to an image generated by the image generation unit while the flood light source is emitting infrared flood light, e.g. on an object and/or a user. The flood image may comprise an image showing a user, in particular the face of the user, while the user is being illuminated with the flood light. The flood image may be generated by imaging and/or recording light reflected by an object and/or user which is illuminated by the flood light. The flood image showing the user may comprise at least a portion of the flood light on at least a portion the user. For example, the illumination by the flood light source and the imaging by using the optical sensor may be synchronized, e.g. by using at least one control unit of the optoelectronic apparatus.

The image generation unit may be configured for imaging and/or recording the pattern image and the flood image at the same time or at different times. The image generation unit may be configured for imaging and/or recording the pattern image and the flood image at a at least partially overlapping measurement areas or equivalents of the measurement areas.

In a further aspect of the invention, a use of an optoelectronic apparatus according to the present invention for authenticating a user of a device comprising the apparatus is disclosed.

The term "user" as used herein is a broad term and is to be given its ordinary and customary meaning to a person of ordinary skill in the art and is not to be limited to a special or customized meaning. The term specifically may refer, without limitation, to a person intended to and/or using the device.

The term "authenticating" as used herein is a broad term and is to be given its ordinary and customary meaning to a person of ordinary skill in the art and is not to be limited to a special or customized meaning. The term specifically may refer, without limitation, to verifying an identity of a user. Specifically, the authentication may comprise distinguishing between the user from other humans or objects, in particular between an authorized access from a non-authorized access. The authentication may comprise verifying identity of a respective user and/or assigning identity to a user. The authentication may comprise generating and/or providing identity information, e.g. to other devices or units such as to at least one authorization unit for authorization for providing access to the device. The identify information may be proofed by the authentication. For example, the identity information may be and/or may comprise at least one identity token. In case of successful authentication an image of a face recorded by at least one image generation unit may be verified to be an image of the user's face and/or the identity of the user is verified. The authenticating may be performed using at least one authentication process. The authentication process may comprise a plurality of steps such as at least one face detection, e.g. on at least one flood image as will be described in more detail below, and at least one identification step in which an identity is assigned to the detected face and/or at least one identity check and/or verifying an identity of the user is performed.

The authentication may be and/or may comprise a biometric authentication. The term "biometric authentication" as used herein is a broad term and is to be given its ordinary and customary meaning to a person of ordinary skill in the art and is not to be limited to a special or customized meaning. The term specifically may refer, without limitation, to authentication using at least one biometric identifier such as a distinctive, measurable characteristics used to label and describe individuals. The biometric identifier may be a physiological characteristics.

In a further aspect of the invention, a device for authenticating a user of a device to perform at least one operation on the device that requires authentication is disclosed.

The device comprising:

- an optoelectronic apparatus according to the present invention;
- at least one image generation unit configured for generating at least one pattern image while the pattern light source is emitting the infrared light pattern and configured for generating at least one flood image while the flood light source is emitting infrared flood light;
- at least one display, wherein the infrared light pattern traverses the display while being illuminated from the pattern light source and/or the infrared flood light traverses the display while being illuminated from the flood light source, wherein the display of the device is at least partially transparent in at least one continuous area covering the pattern light source, the flood light source and/or the image generation unit,
- at least one authentication unit configured for performing at least one authentication process of a user using the flood image and the pattern image.

The device, in particular, may comprise at least one optoelectronic apparatus according to the present invention. Thus, for details, options and definitions, reference may be made to the device and the optoelectronic apparatus as discussed above or as described in further detail below.

The device may be selected from the group consisting of: a television device; a game console; a personal computer; a mobile device, particularly a cell phone, and/or a smart phone, and/or, and/or a tablet computer, and/or a laptop, and/or a tablet, and/or a virtual reality device, and/or a wearable, such as a smart watch; or another type of portable computer; at least one access control device such as a kiosk, a door access device, a car access device; at least one in-car display.

The device may further comprise at least one communication interface, such as a user interface, configured for receiving a request for accessing one or more functions associated with the device, in particular to perform at least one operation on the device that requires authentication. The term "access" as used herein is a broad term and is to be given its ordinary and customary meaning to a person of ordinary skill in the art and is not to be limited to a special or customized meaning. The term specifically may refer, without limitation, to entering and/or using the one or more functions. The term "function associated with the device" as used herein is a broad term and is to be given its ordinary and customary meaning to a person of ordinary skill in the art and is not to be limited to a special or customized meaning. The term specifically may refer, without limitation, to an arbitrary function such as access to at least one element and/or at least one resource of the device or associated with the device. The functions that require authentication of the user may be pre-defined. The one or more functions associated with the device may comprise unlocking the device, and/or access to an application, preferably associated with the device and/or access to a part of an application, preferably associated with the device. For example, the function may comprise access to a content of the device, e.g. as stored in a database of the device, and/or retrievable by the device. In an embodiment, allowing the user to access a resource may include allowing the user to perform at least one operation with a device and/or system. The resource may be a device, a system, a function of a device, a function of a system and/or an entity. Additionally and/or alternatively, allowing the user to access a resource may include allowing the user to access an entity. The entity may be physical entity and/or virtual entity. The virtual entity may be a database for example. The physical entity may be an area with restricted access. The area with restricted access may be one of the following: security areas, rooms, apartments, vehicles, parts of the before mentioned examples, or the like. Device and/or system may be locked. The device and/or the system may only be unlocked by authorized user. The term "request for accessing" as used herein is a broad term and is to be given its ordinary and customary meaning to a person of ordinary skill in the art and is not to be limited to a special or customized meaning. The term specifically may refer, without limitation, to at least one act and/or instance of asking for access. The term "receiving a request" as used herein is a broad term and is to be given its ordinary and customary meaning to a person of ordinary skill in the art and is not to be limited to a special or customized meaning. The term specifically may refer, without limitation, to a process of obtaining a request, e.g. from a data source. The receiving may fully or partially take place automatically. The receiving of the request for accessing one or more functions associated with the device may be performed by using at least one communication interface. The receiving may comprise receiving at least one user input, e.g. via at least one user interface e.g. such as a display of the device, and/or a request from a remote device and/or cloud, e.g. via the communication of the device such as via the internet. For example, the request may be generated by or triggered by at least one user input, such as by inputting a security number or other unlocking action by the user, and/or may be send from a remote device and/or cloud such as via a connected account.

The authentication may be performed using the at least one authentication unit configured for performing at least one authentication process of a user using the flood image and the pattern image.

The authentication unit may comprise at least one processor. The term "processor" as generally used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor, or computer processor may be configured for processing basic instructions that drive the computer or system. It may be a semi-conductor based processor, a quantum processor, or any other type of processor configures for processing instructions. As an example, the processor may be or may comprise a Central Processing Unit ("CPU"). The processor may be a ("GPU") graphics processing unit, ("TPU") tensor processing unit, ("CISC") Complex Instruction Set Computing microprocessor, Reduced Instruction Set Computing ("RISC") microprocessor, Very Long Instruction Word ("VLIW") microprocessor, or a processor implementing other instruction sets or processors implementing a combination of instruction sets. The processing means may also be one or more special-purpose processing devices such as an Application-Specific Integrated Circuit ("ASIC"), a Field Programmable Gate Array ("FPGA"), a Complex Programmable Logic Device ("CPLD"), a Digital Signal Processor ("DSP"), a network processor, or the like. The methods, systems and devices described herein may be implemented as software in a DSP, in a micro-controller, or in any other side-processor or as hardware circuit within an ASIC, CPLD, or FPGA. It is to be understood that the term processor may also refer to one or more processing devices, such as a distributed system of processing devices located across multiple computer systems (e.g., cloud computing), and is not limited to a single device unless otherwise specified. The processor may also be an interface to a remote computer system such as a cloud service. The processor may include or may be a secure enclave processor (SEP). An SEP may be a secure circuit configured for processing the spectra. A "secure circuit" is a circuit that protects an isolated, internal resource from being directly accessed by an external circuit. The processor may be an image signal processor (ISP) and may include circuitry suitable for processing images, in particular images with personal and/or confidential information.

For example, the authentication unit may perform at least one face detection using the flood image. The face detection may be performed locally on the device. Face identification, i.e. assigning an identity to the detected face, however, may be performed remotely, e.g. in the cloud, e.g. especially when identification needs to be done and not only verification. User templates can be stored at the remote device, e.g. in the cloud, and would not need to be stored locally. This can be an advantage in view of storage space and security.

The authentication unit may be configured for identifying the user based on the flood image. Particularly therefore, the authentication unit may forward data to a remote device. Alternatively or in addition, the authentication unit may perform the identification of the user based on the flood image, particularly by running an appropriate computer program having a respective functionality. The term "identifying" as used herein is a broad term and is to be given its ordinary and customary meaning to a person of ordinary skill in the art and is not to be limited to a special or customized meaning. The term specifically may refer, without limitation, to assigning an identity to a detected face and/or at least one identity check and/or verifying an identity of the user.

The authentication may comprise a plurality of steps.

For example, the authentication may comprise performing at least one face detection using the flood image. The face detection may comprise analyzing the flood image. In particular, the analyzing of the flood image may comprise using at least one image recognition technique, in particular a face recognition technique. An image recognition technique comprises at least one process of identifying the user in an image. The image recognition may comprise using at least one technique selected from the technique consisting of: color-based image recognition, e.g. using features such as template matching; segmentation and/or blob analysis e.g. using size, or shape; machine learning and/or deep learning e.g. using at least one convolutional neural network.

For example, the authentication may comprise identifying the user. The identifying may comprise assigning an identity to a detected face and/or at least one identity check and/or verifying an identity of the user. The identifying may comprise performing a face verification of the imaged face to be the user's face. The identifying the user may comprise matching the flood image, e.g. showing a contour of parts of the user, in particular parts of the user's face, with a template, e.g. a template image generated within an enrollment process. The identifying of the user may comprise determining if the imaged face is the face of the user, in particular if the imaged face corresponds to at least one image of the user's face stored in at least one memory, e.g. of the device. Authentication may be successful if the flood image can be matched with an image template. Authentication may be unsuccessful if the flood image cannot be matched with an image template.

For example, the identifying of the user may comprise determining a plurality of facial features. The analyzing may comprise comparing, in particular matching, the determined facial features with template features. The template features may be features extracted from at least one template. The template may be or may comprise at least one image generated in an enrollment process, e.g. when initializing the device. Template may be an image of an authorized user. The template features and/or the facial feature may comprise a vector. Matching of the features may comprise determining a distance between the vectors. The identifying of the user may comprise comparing the distance of the vectors to a least one predefined limit. The user may be successfully identified in case the distance is ≤ the predefined limit at least within tolerances. The user may be declined and/or rejected otherwise.

The analyzing of the flood image may further comprise one or more of the following: a filtering; a selection of at least one region of interest; a formation of a difference image between the flood image and at least one offset; an inversion of flood image; a background correction; a decomposition into color channels; a decomposition into hue; saturation; and brightness channels; a frequency decomposition; a singular value decomposition; applying a Canny edge detector; applying a Laplacian of Gaussian filter; applying a Difference of Gaussian filter; applying a Sobel operator; applying a Laplace operator; applying a Scharr operator; applying a Prewitt operator; applying a Roberts operator; applying a Kirsch operator; applying a high-pass filter; applying a low-pass filter; applying a Fourier transformation; applying a Radon-transformation; applying a Hough-transformation; applying a wavelet-transformation; a thresholding; creating a binary image. The region of interest may be determined manually by a user or may be determined automatically, such as by recognizing the user within the image.

For example, the image recognition may comprise using at least one model, in particular a trained model comprising at least one face recognition model. The analyzing of the flood image may be performed by using a face recognition system, such as FaceNet, e.g. as described in Florian Schroff, Dmitry Kalenichenko, James Philbin, "FaceNet: A Unified Embedding for Face Recognition and Clustering", arXiv:1503.03832. The trained model may comprise at least one convolutional neural network. For example, the convolutional neural network may be designed as described in M. D. Zeiler and R. Fergus, "Visualizing and understanding convolutional networks", CoRR, abs/1311.2901, 2013, or C. Szegedy et al., "Going deeper with convolutions", CoRR, abs/1409.4842, 2014. For more details with respect to convolutional neural network for the face recognition system reference is made to Florian Schroff, Dmitry Kalenichenko, James Philbin, "FaceNet: A Unified Embedding for Face Recognition and Clustering", arXiv: 1503.03832. As training data labelled image data from an image database may be used. Specifically, labeled faces may be used from one or more of G. B. Huang, M. Ramesh, T. Berg, and E. Learned-Miller, "Labeled faces in the wild: A database for studying face recognition in unconstrained environments", Technical Report 07-49, University of Massachusetts, Amherst, October 2007, the Youtube® Faces Database as described in L. Wolf, T. Hassner, and I. Maoz, "Face recognition in unconstrained videos with matched background similarity", in IEEE Conf. on CVPR, 2011, or Google® Facial Expression Comparison dataset. The training of the convolutional neural network may be performed as described in Florian Schroff, Dmitry Kalenichenko, James Philbin, "FaceNet: A Unified Embedding for Face Recognition and Clustering", arXiv: 1503.03832.

The authentication unit may be further configured for considering additional security features extracted from the pattern image. In particular, the authentication unit may be further configured for extracting material data from the pattern image.

Particularly therefore, the authentication unit may forward data to a remote device. Alternatively or in addition, the authentication unit may perform the material determination based on the pattern image, particularly by running an appropriate computer program having a respective functionality. Particularly by considering the material as a parameter for validating the authentication process, the authentication process may be robust against being outwitted by using a recorded image of the user.

The authentication unit may be configured for extracting the material data from the pattern image by beam profile analysis of the light spots. With respect to beam profile analysis reference is made to WO 2018/091649 A1, WO 2018/091638 A1 and WO 2018/091640 A1, the full content of which is included by reference. Beam profile analysis can allow for providing a reliable classification of scenes based on a few light spots. Each of the light spots of the pattern image may comprise a beam profile. As used herein, the term "beam profile" may generally refer to at least one intensity distribution of the light spot on the optical sensor as a function of the pixel. The beam profile may be selected from the group consisting of a trapezoid beam profile; a triangle beam profile; a conical beam profile and a linear combination of Gaussian beam profiles.

The authentication unit may be configured for outsourcing at least one step of the authentication process, such as the identifying of the user, and/or at least one step of the validation of the authentication process, such as the consideration of the material data, to a remote device, specifically a server and/or a cloud server. The device and the remote device may be part of a computer network, particularly the internet. Thereby, the device may be used as a field device that is used by the user for generating data required in the authentication process and/or its validation. The device may transmit the generated data and/or data associated to an intermediate step of the authentication process and/or its validation to the remote device. In such a scenario, the authentication unit may be and/or may comprise a connection interface configured for transmitting information to the remote device. Data generated by the remote device used in the authentication process and/or its validation may further be transmitted to the device. This data may be received by the connection interface comprised by the device. The connection interface may specifically be configured for transmitting or exchanging information. In particular, the connection interface may provide a data transfer connection. As an example, the connection interface may be or may comprise at least one port comprising one or more of a network or internet port, a USB-port, and a disk drive.

It is emphasized that data from the device may be transmitted to a specific remote device depending on at least one circumstance, such as a date, a day, a load of the specific remote device, and so on. The specific remote device may not be selected by the field device. Rather a further device may select to which specific remote device the data may be transmitted. The authentication process and and/or the generation of validation data may involve a use of several different entities of the remote device. At least one entity may generate intermediate data and transmit the intermediate data to at least one further entity.

The authentication unit may be configured for using a facial recognition authentication process operating on the flood image, the pattern image and/or extracted material data. The authentication unit may be configured for extracting material data from the pattern image.

In an embodiment, extracting material data from the pattern image may comprise generating the material type and/or data derived from the material type. Preferably, extracting material data may be based on the pattern image. Material data may be extracted by using at least one model. Extracting material data may include providing the pattern image to a model and/or receiving material data from the model. Providing the image to a model may comprise and may be followed by receiving the pattern image at an input layer of the model or via a model loss function. The model may be a data-driven model. Data-driven model may comprise a convolutional neural network and/or an encoder decoder structure such as an autoencoder. Other examples for generating a representation may be FFT, wavelets, deep learning, like CNNs, energy models, normalizing flows, GANs, vision transformers, or transformers used for natural language processing, Autoregressive Image Modeling, Normalizing Flows, Deep Autoencoders, Deep Energy-Based Models. Supervised or unsupervised schemes may be applicable to generate a representation, also embedding in e.g. cosine or Euclidian metric in ML language. The data-driven model may be parametrized according to a training data set including at least one image and material data, preferably at least one pattern image and material data. In another embodiment, extracting material data may include providing the image to a model and/or receiving material data from the model. In another embodiment, the data-driven model may be trained according to a training data set including at least one image and material data. In another embodiment, the data-driven model may be parametrized according to a training data set including at least one image and material data. The data-driven model may be parametrized according to a training data set to receive the image and provide material data based on the received image. The data-driven model may be trained according to a training data set to receive the image and provide material data as output based on the received image. The training data set may comprise at least one image and material data, preferably material data associated with the at least one image. The image may comprise a representation of the image. The representation may be a lower dimensional representation of the image. The representation may comprise at least a part of the data or the information associated with the image. The representation of an image may comprise a feature vector. In an embodiment, determining a representation, in particular a lower-dimensional representation may be based on principal component analysis (PCA) mapping or radial basis function (RBF) mapping. Determining a representation may also be referred to as generating a representation. Generating a representation based on PCA mapping may include clustering based on features in the pattern image and/or partial image. Additionally or alternatively, generating a representation may be based on neural network structures suitable for reducing dimensionality. Neural network structures suitable for reducing dimensionality may comprise encoder and/or decoder. In an example, neural network structure may be an autoencoder. In an example, neural network structure may comprise a convolutional neural network (CNN). The CNN may comprise at least one convolutional layer and/or at least one pooling layer. CNNs may reduce the dimensionality of a partial image and/or an image by applying a convolution, e.g. based on a convolutional layer, and/or by pooling. Applying a convolution may be suitable for selecting feature related to material information of the pattern image.

In an embodiment, a model may be suitable for determining an output based on an input. In particular, model may be suitable for determining material data based on an image as input. A model may be a deterministic model, a data-driven model or a hybrid model. The deterministic model, preferably, reflects physical phenomena in mathematical form, e.g., including first-principles models. A deterministic model may comprise a set of equations that describe an interaction between the material and the patterned electromagnetic radiation thereby resulting in a condition measure, a vital sign measure or the like. A data-driven model may be a classification model. A hybrid model may be a classification model comprising at least one machine-learning architecture with deterministic or statistical adaptations and model parameters. Statistical or deterministic adaptations may be introduced to improve the quality of the results since those provide a systematic relation between empiricism and theory. In an embodiment, the data-driven model may be a classification model. The classification model may comprise at least one machine-learning architecture and model parameters. For example, the machine-learning architecture may be or may comprise one or more of: linear regression, logistic regression, random forest, piecewise linear, nonlinear classifiers, support vector machines, naive Bayes classifications, nearest neighbors, neural networks, convolutional neural networks, generative adversarial networks, support vector machines, or gradient boosting algorithms or the like. In the case of a neural network, the model can be a multi-scale neural network or a recurrent neural network (RNN) such as, but not limited to, a gated recurrent unit (GRU) recurrent neural network or a long short-term memory (LSTM) recurrent neural network. The data-driven model may be parametrized according to a training data set. The data-driven model may be trained based on the training data set. Training the model may include parametrizing the model. The term training may also be denoted as learning. The term specifically may refer, without limitation, to a process of building the classification model, in particular determining and/or updating parameters of the classification model. Updating parameters of the classification model may also be referred to as retraining. Retraining may be included when referring to training herein. In an embodiment, the training data set may include at least one image and material information.

In an embodiment, extracting material data from the image with a data-driven model may comprise providing the image to a data-driven model. Additionally or alternatively, extracting material data from the image with a data-driven model may comprise may comprise generating an embedding associated with the image based on the data-driven model. An embedding may refer to a lower dimensional representation associated with the image such as a feature vector. Feature vector may be suitable for suppressing the background while maintaining the material signature indicating the material data. In this context, background may refer to information independent of the material signature and/or the material data. Further, background may refer to information related to biometric features such as facial features. Material data may be determined with the data-driven model based on the embedding associated with the image. Additionally or alternatively, extracting material data from the image by providing the image to a data-driven model may comprise transforming the image into material data, in particular a material feature vector indicating the material data. Hence, material data may comprise further the material feature vector and/or material feature vector may be used for determining material data.

In an embodiment, authentication process may be validated based on the extracted material data.

In an embodiment, the validating based on the extracted material data may comprise determining if the extracted material data corresponds a desired material data. Determining if extracted material data matches the desired material data may be referred to as validating.

Allowing or declining the user and/or object to perform at least one operation on the device that requires authentication based on the material data may comprise validating the authentication or authentication process. Validating may be based on material data and/or image. Determining if the extracted material data corresponds a desired material data may comprise determining a similarity of the extracted material data and the desired material data. Determining a similarity of the extracted material data and the desired material data may comprise comparing the extracted material data with the desired material data. Desired material data may refer to predetermined material data. In an example, desired material data may be skin. It may be determined if material data may correspond to the desired material data. In the example, material data may be non-skin material or silicon. Determining if material data corresponds to a desired material data may comprise comparing material data with desired material data. A comparison of material data with desired material data may result in a allowing and/or declining the user and/or object to perform at least one operation that requires authentication. In the example, skin as desired material data may be compared with non-skin material or silicon as material data and the result may be declination since silicon or non-skin material may be different from skin.

In an embodiment, the authentication process or its validation may include generating at least one feature vector from the material data and matching the material feature vector with associate reference template vector for material.

The authentication unit may be configured for authenticating the user in case the user can be identified and/or if the material data matches the desired material data.

The authentication may comprise using even further security features such as a three-dimensional information and/or further liveness data.

For example, the three-dimensional information, such a longitudinal coordinate z of one or more points on the user's face, may be determined using to beam profile analysis, e.g. as described in WO 2018/091640 A1, the full content of which is included by reference. For example, the authentication unit may be configured for determining the at least one longitudinal coordinate z by evaluating a quotient signal Q from sensor signals detected by the image generation unit. The quotient signal Q may be generated by combining the sensor signals, in particular by one or more of dividing the sensor signals, dividing multiples of the sensor signals or dividing linear combinations of the sensor signals. The authentication unit may be configured for using at least one predetermined relationship between the quotient signal Q and the longitudinal coordinate z for determining the longitudinal coordinate. For example, the authentication unit is configured for deriving the quotient signal Q by

$$Q(z_O) = \frac{\iint\limits_{A_1} E(x, y; z_O)\,dxdy}{\iint\limits_{A_2} E(x, y; z_O)\,dxdy}$$

wherein x and y are transversal coordinates, A1 and A2 are areas of the beam profile at the sensor position, and $E(x,y,z_O)$ denotes the beam profile given at the object distance $z_O$. Area A1 and area A2 may differ. In particular, A1 and A2 are not congruent. Thus, A1 and A2 may differ in one or more of the shape or content. As used herein, the term "beam profile" relates to a spatial distribution, in particular in at least one plane perpendicular to the propagation of the light beam, of an intensity of the light beam. The beam profile may be a cross section of the light beam. With respect to further details on determining the longitudinal coordinate z using beam profile analysis reference is made to WO 2018/091640 A1, the full content of which is included by reference.

The authentication unit may be configured for determining the longitudinal coordinate z at a plurality of positions of the user's face and for determining a depth map. The determined depth map may be compared to a predetermined depth map of the user, e.g. determined during an enrollment process. The authentication unit may be configured for authenticating the user in case the determined depth map matches with the predetermined depth map of the user, in particular at least within tolerances. Otherwise, the user may be declined.

In addition, further security features, such as surface roughness, may be used for authentication.

For example, the device may be configured for determining a surface roughness measure, e.g. by

a) receiving a speckle image showing an object while being illuminated by coherent electromagnetic radiation associated with a wavelength between 850 nm and 1400 nm,
b) determining a surface roughness measure based on the speckle image,
c) providing the surface roughness measure.

The authentication device may be configured for authenticating the user or denying by using the surface roughness measure.

The term "speckle image" as used herein is a broad term and is to be given its ordinary and customary meaning to a person of ordinary skill in the art and is not to be limited to a special or customized meaning. The term specifically may refer, without limitation, to an image showing a plurality of speckles. The speckle image may show a plurality of speckles. The speckle image may comprise an image showing the user, in particular at least one part of the face of the user, while the user is being illuminated with the coherent electromagnetic radiation, particularly on a respective area of interest comprised by the image. The speckle image may be generated while the user may be illuminated by coherent electromagnetic radiation associated with a wavelength between 850 nm and 1400 nm. The speckle image may show a speckle pattern. The speckle pattern may specify a distribution of the speckles. The speckle image may indicate the spatial extent of the speckles. The speckle image may be suitable for determining a surface roughness measure. The speckle image may be generated with at least one camera. For generating the speckle image, the user may be illuminated by the illumination source. The term "speckle" as used herein is a broad term and is to be given its ordinary and customary meaning to a person of ordinary skill in the art and is not to be limited to a special or customized meaning. The term specifically may refer, without limitation, to an optical phenomenon caused by interfering coherent electromagnetic radiation due to non-regular or irregular surfaces. Speckles may appear as contrast variations in an image such as a speckle image. The term "speckle pattern" as used herein is a broad term and is to be given its ordinary and customary meaning to a person of ordinary skill in the art and is not to be limited to a special or customized meaning. The term specifically may refer, without limitation, to a distribution of the plurality of speckles. The distribution of the plurality of speckles may refer to a spatial distribution of at least one of the plurality of speckles and/or a spatial distribution of at least two of the plurality of speckles in relation to each other. The spatial distribution of the at least one of the plurality of speckles may refer to and/or specify a spatial extent of the at least one of the plurality of speckles. The spatial distribution of the at least two of the plurality of speckles may refer to and/or specify a spatial extent of the first speckle of the at least two speckles in relation to the second speckle of the at least two speckles and/or a distance between the first speckle of the at least two speckles and the second speckle of the at least two speckles. The generating of the speckle image may be initiated by a user action or may automatically be initiated, e.g. once the presence of a user within a field of view and/or within a predetermined sector of the field of view of the camera is automatically detected. The term "field of view" as used herein is a broad term and is to be given its ordinary and customary meaning to a person of ordinary skill in the art and is not to be limited to a special or customized meaning. The term specifically may refer, without limitation, to an angular extent of the observable world and/or at least one scene that may be captured or viewed by an optical system, such as the image generation unit. The field of view may, typically, be expressed in degrees and/or radians, and, exemplarily, may represent the total angle spanned by the image and/or viewable area.

As outlined above, the speckles may be caused by the irregularities of the surface, the speckles reflect the roughness of the surface. Followingly, determining the surface roughness measure based on the speckles in the speckle image utilizes the relation between the speckle distribution and the surface roughness. Thereby, a low-cost, efficient and readily available solution for surface roughness evaluation can be enabled.

For example, the speckle image may show the user while being illuminated by coherent electromagnetic radiation and the surface roughness of the user's skin may be determined. Preferably, the user may have generated the speckle image and/or initiated the generation of the speckle image. Preferably, the speckle image may be initiated by the user operating an application of a mobile electronic device. By doing so, the user can decide on his or her own when to determine the surface roughness of her or his skin. Followingly, a non-expert user is enabled to determine surface roughness and measurements can be carried out in more natural and less artificial contexts. Thereby, the surface roughness can be evaluated more realistically which in turn serves more realistic measure for the surface roughness. For example, the skin may have different surface roughness during the course of the day depending on the activity of the human. Doing sports may influence the surface roughness as well as creaming the skin. This influence can be verified with the herein described methods and systems.

For example, the speckle image may be associated with a resolution of less than 5 megapixel. Preferably, the speckle image may be associated with a resolution of less than 3 megapixel, more preferably less than 2.5 megapixel, most preferably less than 2 megapixel. Such speckles images can be generated with readily available, small and cheap smartphone cameras. Furthermore, the storage and processing capacities needed for evaluating the surface roughness measure are small. Thus, the low resolution of the speckle image used for evaluating the surface roughness enables the usage of mobile electronic devices for evaluating the surface roughness, in particular devices like smartphone or wearables since these devices have strictly limited size, memory and processing capacity.

The speckle image may be reduced to a predefined size prior to determining the surface roughness measure. Reducing the speckle image to a predefined size may be based on applying one or more image augmentation techniques. Reducing the speckle image to a predefined sized may comprise selecting an area of the speckle image of the predefined size and cutting the speckle image to the area of the speckle image of the predefined size. The area of the speckle image of the predefined size may be associated with the living organism such as the human, in particular with the skin of the living organism such as the skin of the human. The part of the image other than the area of the speckle image of the predefined size may be associated with background and/or may be independent of the living organism such as a human. By doing so a reduced amount of data needs to be processed which decreases the time needed for determining the surface roughness or allows for less storage and processor to be needed. Furthermore, the part of the image useful for the analysis is selected. Hence, reducing the size may result in disregarding parts of the speckle image independent of the object or living organism such as a human. Followingly, the surface roughness measure can be determined easily and for the analysis disturbing parts not relating to the user are ignored.

For example, image augmentation techniques may comprise at least one of scaling, cutting, rotating, blurring, warping, shearing, resizing, folding, changing the contrast, changing the brightness, adding noise, multiply at least a part of the pixel values, drop out, adjusting colors, applying a convolution, embossing, sharpening, flipping, averaging pixel values or the like.

The reducing of the speckle image to a predefined size may be based on detecting the user in the speckle image. In particular, the speckle image may be reduced to a predefined size based on detecting the user in the speckle image prior to determining the surface roughness measure. In particular, reducing the speckle image to the predefined size based on detecting the user in the speckle image may comprise detecting the contour of the user, e.g. detecting the contour of a user's face and reducing the speckle image to an area associated with the user, in particular with an area associated with the user's face. Preferably the area associated with the user may be within the contour of the user, in particular the user and/or the contour of a user's face.

The flood image may show the contour of the user. The contour of the user may be detected based on the flood image. Preferably, the contour of the user may be detected by providing the flood image to an object detection data-driven model, in particular a user detection model, wherein object detection data-driven model may be parametrized and/or trained to receive the flood image and provide an indication on the contour of the user based on a training data set. The training data set may comprise flood images and indications on the contour of objects and/or humans. The indication of the contour may include a plurality of points indicating the location of a specific landmark associated with the user. For example, where the speckle image may be associated with a user's face, the user's face may be detected based on the contour, wherein the contour may indicate the landmarks of the face such as the nose point or the outer corner of the lips or eyebrows.

The term "surface roughness" as used herein, is a broad term and is to be given its ordinary and customary meaning to a person of ordinary skill in the art and is not to be limited to a special or customized meaning. The term specifically may refer, without limitation, to a property of a surface associated with the user. In particular, the surface roughness may characterize lateral and/or vertical extent of surface features. The surface roughness may be evaluated based on the surface roughness measure. The surface roughness measure may quantify the surface roughness.

The term "surface feature" as used herein, is a broad term and is to be given its ordinary and customary meaning to a person of ordinary skill in the art and is not to be limited to a special or customized meaning. The term specifically may refer, without limitation, to an arbitrarily shaped structure associated with the surface, in particular of the user. In particular, the surface feature may refer to a substructure of the surface associated with the user. A surface may comprise a plurality of surface features. For example, an uplift or a sink may be surface features. Preferably, a surface feature may refer to a part of the surface associated with an angle unequal to 90° against the surface normal.

The term "surface roughness measure" as used herein, is a broad term and is to be given its ordinary and customary meaning to a person of ordinary skill in the art and is not to be limited to a special or customized meaning. The term specifically may refer, without limitation, to a measure suitable for quantifying the surface roughness. Surface roughness measure may be related to the speckle pattern. For example, surface roughness measure may comprise at least one of a fractal dimension, speckle size, speckle contrast, speckle modulation, roughness exponent, standard deviation of the height associated with surface features, lateral correlation length, average mean height, root mean square height or a combination thereof. Preferably, the surface roughness measure may be suitable for describing the vertical and lateral surface features. Surface roughness measure may comprise a value associated with the surface roughness measure. Surface roughness measure may refer to a term of a quantity for measuring the surface roughness and/or to the values associated with the quantity for measuring the surface roughness. The determining of the surface roughness measure based on the speckle image may refer to determining the surface roughness measure based on a speckle pattern in the speckle image.

The surface roughness measure may be determined based on the speckle image by providing the speckle image to a model and receiving the surface roughness measure from the model. For example, the model may be suitable for determining an output based on an input. In particular, model may be suitable for determining a surface roughness measure based on the speckle image, preferably based on receiving speckle image.

For example, the model may be or may comprise one or more of a physical model, a data-driven model or a hybrid model. A hybrid model may be a model comprising at least one data-driven model with physical or statistical adaptations and model parameters. Statistical or physical adaptations may be introduced to improve the quality of the results since those provide a systematic relation between empiricism and theory. For example, a data-driven model may represent a correlation between the surface roughness measure and the speckle image. The data-driven model may obtain the correlation between surface roughness measure and speckle image based on a training data set comprising a plurality of speckle images and a plurality of surface roughness measures. For example, the data-driven model may be parametrized based on a training data set to receive the speckle image and provide the surface roughness measure. The data-driven model may be trained based on a training data set. The training data set may comprise at least one speckle image and at least one corresponding surface roughness measure. The training data set may comprise a plurality of speckle image and a plurality of surface roughness measures. Training the model may comprise parametrizing the model. The data-driven model may be parametrized and/or trained to provide the surface roughness measure based on the speckle image, in particular receiving the speckle image. Determining the surface roughness measure based on the speckle image may comprise providing the speckle image to a data-driven model and receiving the surface roughness measure from the data-driven model. Providing the surface roughness measure based on the speckle image may comprise mapping the speckle image to the surface roughness measure. The data-driven model may be parametrized and/or trained to receive the speckle image. Data-driven model may receive the speckle image at an input layer. The term training may also be denoted as learning. The term specifically may refer, without limitation, to a process of building the data-driven model, in particular determining and/or updating parameters of the data-driven model. Updating parameters of the data-driven model may also be referred to as retraining. Retraining may be included when referring to training herein. During the training the data-driven model may adjust to achieve best fit with the training data, e.g. relating the at least on input value with best fit to the at least one desired output value. For example, if the neural network is a feedforward neural network such as a CNN, a backpropagation-algorithm may be applied for training the neural network. In case of a RNN, a gradient descent algorithm or a backpropagation-through-time algorithm may be employed for training purposes. Training a data-driven model may comprise or may refer without limitation to calibrating the model.

For example, the physical model may reflect physical phenomena in mathematical form, e.g., including first-principles models. A physical model may comprise a set of equations that describe an interaction between the object and the coherent electromagnetic radiation thereby resulting in a surface roughness measure. The physical model may be based on at least one of a fractal dimension, speckle size, speckle contrast, speckle modulation, roughness exponent, standard deviation of the height associated with surface features, lateral correlation length, average mean height, root mean square height or a combination thereof. In particular, the physical model may comprise one or more equations relating the speckle image and the surface roughness measure based on equations relating to the fractal dimension, speckle size, speckle contrast, speckle modulation, roughness exponent, standard deviation of the height associated with surface features, lateral correlation length, average mean height, root mean square height or a combination thereof.

For example, the fractal dimension may be determined based on the Fourier transform of the speckle image and/or the inverse of the Fourier transform of the speckle image. For example, the fractal dimension may be determined based on the slope of a linear function fitted to a double logarithmic plot of the power spectral density versus a frequency obtained by Fourier transform. The speckle size may refer to the spatial extent of one or more speckles. Where the speckle size may refer to the spatial extent of more than one speckle, the speckle size may be determined based on an average of more than one speckle sizes and/or a weighting of the more than one speckle sizes. The speckle contrast may refer to a measure for the standard deviation of at least a part of the speckle image in relation to the mean intensity of at least the part of the speckle image. The speckle modulation may refer to a measure for the intensity fluctuation associated with the speckles in at least a part of the speckle image. Roughness exponent, standard deviation of the height associated with surface features, lateral correlation length or a combination thereof may be determined based on the autocorrelation function associated with the double logarithmic plot of the power spectral density versus a frequency obtained by Fourier transform.

For example, determining the surface roughness measure based on the speckle image may comprise determining the surface roughness measure based on a speckle pattern. For example, determining the surface roughness based on the speckle pattern may comprise determining the surface roughness based on a distribution of a plurality of speckles in the speckle image. Determining the surface roughness measure based on the distribution of the plurality of speckles in the speckle image may refer to determining the distribution of the plurality of speckles in the speckle image. Determining the distribution of the speckles may comprise determining at least one of fractal dimension associated with the speckle image, speckle size associated with the speckle image, speckle contrast associated with the speckle image, speckle modulation associated with the speckle image, roughness exponent associated with the speckle image, standard deviation of the height associated with surface features associated with the speckle image, lateral correlation length associated with the speckle image, average mean height associated with the speckle image, root mean square height associated with the speckle image or a combination thereof.

Additionally or alternatively, determining the surface roughness measure may comprise determining at least one of fractal dimension associated with the speckle image, speckle size associated with the speckle image, speckle contrast associated with the speckle image, speckle modulation associated with the speckle image, roughness exponent associated with the speckle image, standard deviation of the height associated with surface features associated with the speckle image, lateral correlation length associated with the speckle image, average mean height associated with the speckle image, root mean square height associated with the speckle image or a combination thereof.

For example, determining the surface roughness measure may be based on the distribution of the speckles in the speckle image. Determining the surface roughness measure based on the distribution of the speckles in the speckle image may comprise determining at least one of a size distribution of the speckles, a power spectral density associated with the speckle image, a fractal dimension associated with the speckle image, a speckle contrast, a speckle modulation or a combination thereof.

Additionally or alternatively, determining the surface roughness measure based on the distribution of the speckles in the speckle image may comprise providing the speckle image to a model, in particular a data-driven model, wherein the data-driven model may be parametrized and/or trained based on a training data set comprising one or more speckle image and one or more corresponding surface roughness measure.

For example, the surface roughness measure may be determined based on the speckle image by providing the speckle image to a model and receiving the surface roughness measure from the model. The model may be a data-driven model and may be parametrized and/or trained based on a training data set comprising a plurality of speckle images and corresponding surface roughness measures or indications of surface roughness measures. Additionally or alternatively, the model may be a physical model.

For example, the method may further comprise generating a partial speckle image. A partial speckle image may refer to a partial image generated based on the speckle image. The partial speckle image may be generated by applying one or more image augmentation techniques to the speckle image.

For example, the method may further comprise generating a first speckle image and a second speckle image. The speckle image may comprise the first speckle image and the second speckle image. The first speckle image may refer to a first part of the speckle image. The second speckle image may refer to a second part of the speckle image. Preferably, the first speckle image and the second speckle image may be different from each other. In particular, the first speckle image and the second speckle image may be non-overlapping. The first speckle image and the second speckle image may be generated by applying one or more image augmentation techniques to the speckle image. Determining the surface roughness measure based on the speckle image may comprise determining a first surface roughness measure based on the first speckle image and determining a second surface roughness measure based on the second speckle image. Providing the surface roughness measure may include providing the first surface roughness measure and the second surface roughness measure. In particular, the first surface roughness measure and the second surface roughness measure may be provided together. Preferably, the first surface roughness measure and the second surface roughness measure may be provided in a surface roughness measure map indicating the spatial distribution of surface roughness measures. For example, the surface roughness measure map may indicate the first surface roughness measure associated with a first area in the surface roughness measure map and the second surface roughness measure map may indicate the second surface roughness measure associated with a second area in the surface roughness measure map. In particular, the surface roughness measure map may be similar to a heat map, wherein the surface roughness measures may be plotted against the area associated with the respective surface roughness measures.

The surface roughness measure is determined by using at least one processor. The authentication unit may be or may comprise at least one processor and/or may be designed as software or application. The authenticating of the user or denial using the surface roughness measure is performed by using an authentication unit of the device and/or a remote authentication unit.

In an embodiment, the device may be a mobile electronic device. The surface roughness measure may be determined by a mobile electronic device and/or wherein the speckle image is generated with a camera of a mobile electronic device. In particular, the human may initiate the generation of the speckle image based on the mobile electronic device. This is beneficial since many humans own a mobile electronic device such as a smartphone. These devices accompany the human and thus, a measurement of the surface roughness is possible at any time and can be carried out in more natural and less artificial contexts. Thereby, the surface roughness can be evaluated more realistically which in turn serves more realistic measure for the surface roughness.

The surface roughness measure may be used as biometric identifier for uniquely identifying the user. For example, the authentication may comprise determining if the surface roughness measure corresponds to a surface roughness measure of a human being. For example, the method may comprise determining if the surface roughness measure corresponds to a surface roughness measure of the specific user. Determining if the surface roughness measure corresponds to a surface roughness measure of a human being and/or of the specific user may comprise comparing the surface roughness measure to at least one pre-defined or predetermined range of values of surface roughness measure, e.g. stored in at least one database e.g. of the device or of a remote database such as of a cloud. In case the determined surface roughness measure is at least within tolerances within the re-defined or predetermined range of values of surface roughness measure, the user is authenticated otherwise the authentication is unsuccessful. For example, the surface roughness measure may be a human skin roughness. In case the determined human skin roughness is within the range of 10 $\mu$m to 150 $\mu$m the user is authenticated. However, other ranges are possible.

Additionally or alternatively, the device may be configured for extracting blood perfusion data. For example, the light beams projected by the illumination source, e.g. a projector, may be coherent patterned infrared illumination. Extracting blood perfusion data may comprise determining a speckle contrast of the pattern image and determining a blood perfusion measure based on the determined speckle contrast. A speckle contrast may represents a measure for a mean contrast of an intensity distribution within an area of a speckle pattern. In particular, a speckle contrast K over an area of the speckle pattern may be expressed as a ratio of standard deviation $\sigma$ to the mean speckle intensity <I>, i.e.,

$$K = \frac{\sigma}{<I>}$$

Speckle contrast may comprise a speckle contrast value. Speckle contrast values may be distributed between 0 and 1. The blood perfusion measure may be determined based on the speckle contrast.

The blood perfusion measure may depend on the determined speckle contrast. If the speckle contrast changes, the blood perfusion measure derived from the speckle contrast may change accordingly. A blood perfusion measure may be a single number or value that may represent a likelihood that the object is a living subject. This information can be used as additional security feature for authentication a user.

For example, for determining the speckle contrast, the complete pattern image may be used. Alternatively, for determining the speckle contrast, a section of the pattern image may be used. The section of the pattern image, preferably, represents a smaller area of the pattern image than an area of the complete pattern image. The section of the pattern image may be obtained by cropping the pattern image.

In an embodiment, a data-driven model may be used for determining a blood perfusion measure. Data-driven model be parametrized and/or trained based on a training data set. The training data set may comprise a pattern image and a blood perfusion measure. The data-driven model may be parametrized and/or trained based on the training data set to output a blood perfusion measure based on receiving a pattern image.

The authentication process may be validated based on the blood perfusion measure. In an embodiment, the validating based on the blood perfusion measure may comprise determining if the blood perfusion measure corresponds to blood perfusion measure of a human being. Determining if the blood perfusion measure corresponds a human being may be referred to as validating. Allowing or declining the user and/or object to perform at least one operation on the device that requires authentication based on the blood perfusion measure may comprise validating the authentication or authentication process. Validating may be based on the blood perfusion measure. Determining if the blood perfusion measure corresponds a human being may comprise comparing the blood perfusion measure to at least one pre-defined or pre-determined range of values of blood perfusion measure, e.g. stored in at least one database. In case the extracted blood perfusion measure is at least within tolerances within the re-defined or pre-determined range of values of blood perfusion measure, the authentication is validated, otherwise not. In case the authentication is validated the method may comprise allowing the user to perform at least one operation that requires authentication. Otherwise, in case the authentication is not validated the method may comprise declining the user to perform at least one operation that requires authentication.

The device may comprise at least one authorization unit configured for allowing the user to perform at least one operation on the device, e.g. unlocking the device, in case of successful authentication of the user or declining the user to perform at least one operation on the device in case of non-successful authentication. Thereby, the user may become aware of the result of the authentication. The authorization unit may be configured for allowing or declining the user to perform at least one operation on the device that requires authentication based on the material data and the identifying using the flood image. The authorization unit may be configured for allowing or declining the user to access one or more functions associated with the device depending on the authentication or denial. The allowing may comprise granting permission to access the one or more functions. The authorization unit may be configured for determining if the user correspond to an authorized user, wherein allowing or declining is further based on determining if the user corresponds to an authorized user. The term "authorization" as used herein is a broad term and is to be given its ordinary and customary meaning to a person of ordinary skill in the art and is not to be limited to a special or customized meaning. The term specifically may refer, without limitation, to a process of assigning access rights to the user, in particular a selective permission or selective restriction of access to the device and/or at least one resource of the device. The authorization unit may be configured for access control. The term "authorization unit" as used herein is a broad term and is to be given its ordinary and customary meaning to a person of ordinary skill in the art and is not to be limited to a special or customized meaning. The term specifically may refer, without limitation, to a unit such as a processor configured for authorization of a user. The authorization unit may comprise at least one processor or may be designed as software or application. The authorization unit and the authentication unit may be embodied integral, e.g. by using the same processor. The authorization unit may be configured for allowing the user to access the one or more functions, e.g. on the device, e.g. unlocking the device, in case of successful authentication of the user or declining the user to access the one or more functions, e.g. on the device, in case of non-successful authentication.

The device e.g. by using the display may be configured for displaying a result of the authentication and/or the authorization e.g. by using at least one communication interface such as a user interface, e.g. a display.

The device for authenticating a user may be comprised by the device of the user, e.g. may be an element of the device of the user, or may be the user's device itself.

In a further aspect, the present invention discloses a method for authenticating a user of a device to perform at least one operation on the device that requires authentication. The device is a device according to the present invention, such as according to one or more of the embodiments given above or given in further detail below.

The method comprises:

- illuminating the user with the infrared light pattern from the pattern light source,
- illuminating the user with infrared flood light from the flood light source,
- generating at least one pattern image with the image generation unit showing at least a part of the user while the user is being illuminated with the infrared light pattern, and generating at least one flood image with the image generation unit showing at least a part of the user while the user is being illuminated with the infrared flood light,
- identifying the user based on the flood image,
- extracting at least one security feature from the at least one pattern image; and
- allowing or declining the user to perform at least one operation on the device that requires authentication based on the security feature and the identifying.

The method steps may be performed in the given order or may be performed in a different order. Further, one or more additional method steps may be present which are not listed. Further, one, more than one or even all of the method steps may be performed repeatedly. For details, options and definitions, reference may be made to the optoelectronic apparatus and the device as discussed above.

The extracting of the security feature comprise extracting material data from the at least one pattern image. The method may comprise allowing or declining the user to perform at least one operation on the device that requires authentication based on the material data and the identifying and/or even further security features such as a three-dimensional information and/or further liveness data.

The method may be computer implemented. The term "computer implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network. The computer and/or computer network may comprise at least one processor which is configured for performing at least one of the method steps of the method according to the present invention. Specifically, each of the method steps is performed by the computer and/or computer network. The method may be performed completely automatically, specifically without user interaction. For example, the illuminating and/or the generating of images may be triggered and/or executed by using at least one processor.

All described method steps may be performed by using the device. Therefore, a single processing device may be configured to exclusively perform at least one computer program, in particular at least one line of computer program code configured to execute at least one algorithm, as used in at least one of the embodiments of the method according to the present invention.

Herein, the computer program as executed on the single processing device may comprise all instructions causing the computer to carry out the method. Alternatively, or in addition, at least one method step may be performed by using at least one remote device, especially selected from at least one of a server or a cloud server, particularly when the device and the remote device may be part of a computer network. In this case, the computer program may comprise at least one remote component to be executed by the at least one remote processing device to carry out the at least one method step. The remote component, e.g. may have the functionality of performing the identifying of the user. Further, the computer program may comprise at least one interface configured to forward to and/or receive data from the at least one remote component of the computer program.

In a further aspect, a computer program is disclosed, which comprises instructions which, when the program is executed by the device, cause the device to perform the method according to any one of the preceding embodiments referring to a method. Specifically, the computer program may be stored on a computer-readable data carrier and/or on a computer-readable storage medium. The computer program may be executed on at least one processor comprised by the device. The computer program may generate input data by accessing and/or controlling at least one unit of the device, such as the projector and/or the flood illumination source and/or the image generation unit. The computer program may generate outcome data based on the input data, particularly by using the authentication unit.

As used herein, the terms "computer-readable data carrier" and "computer-readable storage medium" specifically may refer to non-transitory data storage means, such as a hardware storage medium having stored thereon computer-executable instructions. The stored computer-executable instruction may be associate with the computer program. The computer-readable data carrier or storage medium specifically may be or may comprise a storage medium such as a random-access memory (RAM) and/or a read-only memory (ROM).

In an embodiment, a computer-readable storage medium may refer to any suitable data storage device or computer readable memory on which is stored one or more sets of instructions (for example software) embodying any one or more of the methodologies or functions described herein. The instructions may also reside, completely or at least partially, within the main memory and/or within the processor during execution thereof by the computer, main memory, and processing device, which may constitute computer-readable storage media. The instructions may further be transmitted or received over a network via a network interface device. Computer-readable storage medium includes hard drives, for example on a server, USB storage device, CD, DVD or Blue-ray discs.

The computer-readable storage medium, in particular the non-transitory computer-readable storage medium comprises instructions that when executed by a computer, in particular the processor of the device according to the present invention, cause the computer to:

- receive a request for accessing one or more functions associated with the device;
- execute at least one authentication process comprising the following steps:
- triggering to illuminate the user with the infrared light pattern from the pattern illumination source and illuminating the user with infrared flood light from the flood illumination source,
- triggering to generate at least one pattern image and at least one flood image of the user while the user,
- identifying the user based on the flood image;
- extracting at least one security feature from the at least one pattern image;
- authenticating the user or denial based on the security feature and the identifying.

Thus, specifically, one, more than one or even all of method steps as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper for-mat, or on a computer-readable data carrier and/or on a computer-readable storage medium. Specifically, the computer program product may be distributed over a data network.

Further disclosed and proposed herein is a non-transient computer-readable medium including instructions that, when executed by one or more processors, cause the one or more processors to perform the method according to one or more of the embodiments disclosed herein.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:

- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method ac-cording to one of the embodiments described in this description, if the program code means are executed on a computer or on a computer network.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Summarizing and without excluding further possible embodiments, the following embodiments may be envisaged:

Embodiment 1. An optoelectronic apparatus configured for emitting at least one infrared light pattern comprising a plurality of infrared light beams and for emitting infrared flood light, comprising:

- at least one refractive and/or diffractive optical element;
- at least one polarization-sensitive beam splitter;
- at least one light emitter structure comprising at least one first array of light emitters and at least one second array of light emitters, wherein the first array is configured for emitting light with a first polarization and the second array is configured for emitting light with a second polarization, different from the first polarization,
- at least two illumination paths comprising a light pattern illumination path and a flood light illumination path,

  wherein the light pattern illumination path comprises a pattern light source comprising one of the first array or the second array, wherein the pattern light source is arranged at a back focal length of the optical element, wherein the optical element is configured for collimating and/or replicating light from the pattern light source, thereby forming the pattern light source configured for emitting the infrared light pattern,
  wherein the flood light illumination paths comprises a flood light source comprising the other one of the first array or the second array, wherein the flood light source is arranged with an offset to the back focal length of the optical element, wherein the optical element is configured for defocusing light from the flood light source, thereby forming the flood light source configured for emitting the infrared flood light,
  wherein a reflection plane of the beam splitter is oriented such that light emitted from one of the pattern light source or the flood light source passes through the beam splitter unaltered to the optical element and that light emitted from the other one of the pattern light source or the flood light source gets reflected towards the optical element.

Embodiment 2. The optoelectronic apparatus according to embodiment 1, wherein the first array is oriented in direction of an optical axis of the optical element, wherein the second array is oriented perpendicular to the first array.

Embodiment 3. The optoelectronic apparatus according to any one of the preceding embodiments, wherein the optoelectronic apparatus is comprised in a device, wherein the device comprises a display and the infrared light pattern traverses the display while being illuminated from the pattern light source and/or the infrared flood light traverses the display while being illuminated from the flood light source, wherein the display of the device is at least partially transparent in at least one continuous area covering the pattern light source and the flood light source.

Embodiment 4. The optoelectronic apparatus according to the preceding embodiment, wherein the device is selected from the group consisting of: a television device; a game console; a personal computer; a mobile device, particularly a cell phone, and/or a smart phone, and/or, and/or a tablet computer, and/or a laptop, and/or a tablet, and/or a virtual reality device, and/or a wearable, such as a smart watch; or another type of portable computer; at least one access control device such as a kiosk, a door access device, a car access device; at least one in-car display.

Embodiment 5. The optoelectronic apparatus according to any one of the two preceding embodiments, wherein the device comprises at least one image generation unit configured for generating at least one pattern image while the pattern light source is emitting the infrared light pattern and configured for generating at least one flood image while the flood light source is emitting infrared flood light, wherein the light emitters of the pattern light source and the light emitters of the flood light source are arranged at the optical center of the image generation unit.

Embodiment 6. The optoelectronic apparatus according to any one of the preceding embodiments, wherein each of the light emitters comprise at least one vertical cavity surface-emitting laser (VCSEL), and/or wherein the light emitters are configured for emitting light in the near infrared spectral range, preferably a wavelength of the emitted light is from 760 nm to 1.5 $\mu$m, preferably 940 nm, 1140 nm or 1320 to 1380 nm.

Embodiment 7. The optoelectronic apparatus according to any one of the preceding embodiments, wherein the first array is mounted on a first base and the second array is mounted on a second base tilted with respect to the first base, wherein the first base and second base comprise at least one thermally conducting material.

Embodiment 8. The optoelectronic apparatus according to any one of the preceding embodiments, wherein all light emitter cavities of one array emit with the same polarization.

Embodiment 9. The optoelectronic apparatus according to any one of the preceding embodiments, wherein the optical element comprises one or more of at least one refractive lens, at least one system of refractive lenses, at least one diffractive optical element (DOE), at least one meta lens.

Embodiment 10. Use of an optoelectronic apparatus according to any of the preceding embodiments for authenticating a user of a device comprising the apparatus .

Embodiment 11. A device for authenticating a user of a device to perform at least one operation on the device that requires authentication, the device comprising:

- an optoelectronic apparatus according to any of the preceding embodiments referring to an optoelectronic apparatus;
- at least one image generation unit configured for generating at least one pattern image while the pattern light source is emitting the infrared light pattern and configured for generating at least one flood image while the flood light source is emitting infrared flood light;
- at least one display, wherein the infrared light pattern traverses the display while being illuminated from the pattern light source and/or the infrared flood light traverses the display while being illuminated from the flood light source, wherein the display of the device is at least partially transparent in at least one continuous area covering the pattern light source, the flood light source and/or the image generation unit,
- at least one authentication unit configured for performing at least one authentication process of a user using the flood image and the pattern image.

Embodiment 12. A method for authenticating a user of a device to perform at least one operation on the device that requires authentication, wherein the device is a device according to the preceding embodiment, and the method comprising:

- illuminating the user with the infrared light pattern from the pattern light source,
- illuminating the user with infrared flood light from the flood light source,
- generating at least one pattern image with the image generation unit showing at least a part of the user while the user is being illuminated with the infrared light pattern, and generating at least one flood image with the image generation unit showing at least a part of the user while the user is being illuminated with the infrared flood light,
- identifying the user based on the flood image,
- extracting at least one security feature from the at least one pattern image; and
- allowing or declining the user to perform at least one operation on the device that requires authentication based on the security feature and the identifying.

Embodiment 13. A computer program comprising instructions which, when the program is executed by the device according to embodiment 11, cause the device to perform the method according to the preceding embodiment.

Embodiment 14. A computer-readable storage medium comprising instructions which, when the instructions are executed by the device according to embodiment 11, cause the device to perform the method according to embodiment 12.

Embodiment 15. A non-transient computer-readable medium including instructions that, when executed by one or more processors, cause the one or more processors to perform the method according to embodiment 12.

Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.
In the Figures:

Figure 1 shows an embodiment of a device;

Figure 2 shows an embodiment of a method; and

Figures 3A and 3B show an embodiment of the optoelectronic apparatus.

Detailed description of the embodiments

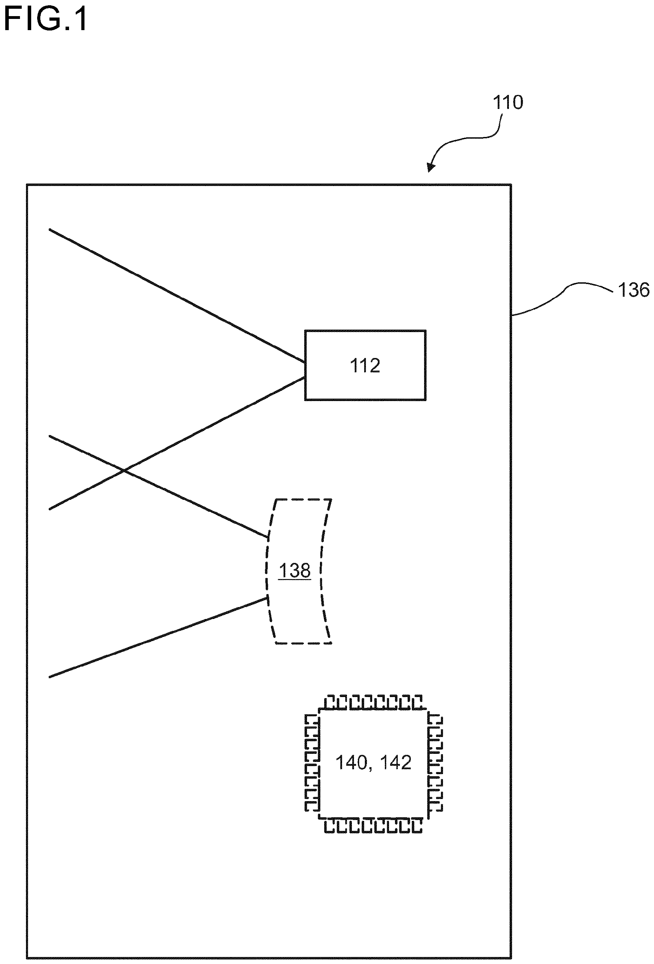

Figure 1 shows an embodiment of a device 110 of the present invention in a highly schematic fashion. For example, the device 110 may be selected from the group consisting of: a television device; a game console; a personal computer; a mobile device, particularly a cell phone, and/or a smart phone, and/or, and/or a tablet computer, and/or a laptop, and/or a tablet, and/or a virtual reality device, and/or a wearable, such as a smart watch; or another type of portable computer; at least one access control device such as a kiosk, a door access device, a car access device; at least one in-car display.

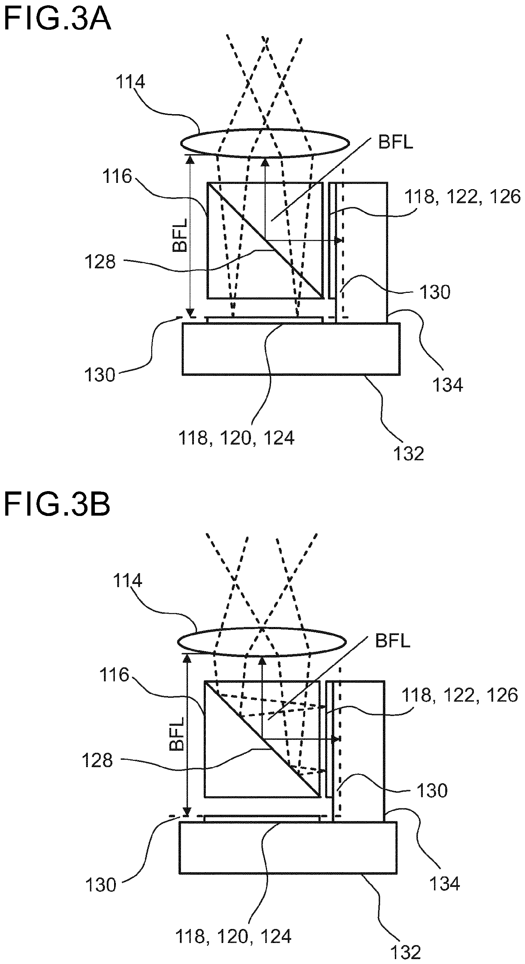

In this embodiment, the device 110 comprises an optoelectronic apparatus 112 according to the present invention configured for emitting at least one infrared light pattern comprising a plurality of infrared light beams and for emitting infrared flood light. An embodiment of the optoelectronic apparatus 112 is shown in Figures 3A and 3B.

The optoelectronic apparatus 112 comprises:

- at least one refractive and/or diffractive optical element 114;
- at least one polarization-sensitive beam splitter 116;
- at least one light emitter structure 118 comprising at least one first array 120 of light emitters and at least one second array 122 of light emitters, wherein the first array 120 is configured for emitting light with a first polarization and the second array 122 is configured for emitting light with a second polarization, different from the first polarization,
- at least two illumination paths comprising a light pattern illumination path and a flood light illumination path,

    wherein the light pattern illumination path comprises a pattern light source 124 comprising the first array 120, in the embodiment of Figures 3A and 3B, wherein the pattern light source 124 is arranged at a back focal length BFL of the optical element 114, wherein the optical element 114 is configured for collimating and/or replicating light from the pattern light source 124, thereby forming the pattern light source 124 configured for emitting the infrared light pattern,

    wherein the flood light illumination paths comprises a flood light source 126 comprising the second array 122, in the embodiment of Figures 3A and 3B, wherein the flood light source 126 is arranged with an offset to the back focal length BFL of the optical element 114, wherein the optical element 114 is configured for defocusing light from the flood light source 126, thereby forming the flood light source 126 configured for emitting the infrared flood light,

    wherein a reflection plane 128 of the beam splitter 116 is oriented such that light emitted from one of the pattern light source 124, in the embodiment of Figures 3A and 3B, passes through the beam splitter 116 unaltered to the optical element 114 and that light emitted from the flood light source 126, in the embodiment of Figures 3A and 3B, gets reflected towards the optical element 114.

In Figure 3A, the pattern light source 124 is active. In Figure 3B, the flood light source 126 is active.

The light emitters each may comprise at least one vertical cavity surface emitting laser (VCSEL). Examples for VCSELs can be found e.g. in en.wikipedia.org/wiki/Verticalcavity_surface-emitting_laser. The light emitters may be configured for emitting light in the near infrared spectral range, preferably a wavelength of the emitted light is from 760 nm to 1.5 $\mu$m, preferably 940 nm, 1140 nm or 1320 to 1380 nm.

The arrays 120, 122 may be a two-dimensional or one dimensional array. The arrays 120, 122 may comprise a plurality of emitters arranged in a matrix. The light emitters of the respective arrays 120, 122 may be arranged in a one dimensional, e.g. row, array, or a two dimensional array, in particular in a matrix having m rows and n columns, with m, n, independently, being positive integers. The matrix specifically may be or may comprise a rectangular matrix having one or more rows and one or more columns. The rows and columns specifically may be arranged in a rectangular fashion. However, other arrangements are feasible, such as nonrectangular arrangements. The light emitters may be arranged such that the infrared light pattern is a hexagonal pattern. Thus, for example, the matrix may be a hexagonal matrix.

The first array 120 is configured for emitting light with a first polarization and the second array 122 is configured for emitting light with a second polarization, different from the first polarization. For example, the light emitters are polarized emitters configured for emitting polarized light. The polarized emitter may itself be polarized or may comprise at least one polarization filter. The polarization filter may comprise at least one linear polarizer and/or at least one circular polarizer. The polarization filter may be configured for separating vertically polarized (s-polarized) from horizontally polarized (p-polarized) light. For example, a multi-element light source with individual emission elements may be used with different polarizations which may be turned on and off individually. All light emitter cavities of one array may emit with the same polarization.

The first array 120 of light emitters may arranged on a first base 132. The second array 122 of light emitters may be arranged on a second base 134. The respective base 132, 134 may comprise a plurality of cavities into which the light emitters can be mounted. The respective base 132, 134 may have an arbitrary shape such as a rectangular, a circular, a hexagonal shape. The shape may refer to a side of the base oriented perpendicular to the direction in which height is measured. The respective base 132, 134 may comprise at least one semiconductor substrate. The respective base 132, 134 may be an element of the light emitter structure 118 and/or an additional element. The respective base 132, 134 may be and/or may comprise a thermally conducting printed circuit board (PCB).

The light emitters may form a chip of light emitters, e.g. a VCSEL die, e.g. as sawn out of a wafer. Such a chip of light emitters may be mounted on the respective base 132, 134, e.g. by using at least one heat conductive adhesive. The respective base 132, 134 may comprise at least one thermally conducting material. The respective base 132, 134 can be the bottom of the optoelectronic apparatus 112, e.g. of a housing of the optoelectronic apparatus. Alternatively, the base and the housing may be separate elements. For example, the chip of light emitters may be mounted, e.g. by using at least one heat conductive adhesive, on the base, e.g. the PCB, and the housing may be applied to this combined element.

The respective base 132, 134 may comprise at least one thermally conducting material, in particular thermally conducting materials. The thermally conducting material may be configured as a heat exchanger. The thermally conducting material may be configured for regulating the temperature of the light emitter. The thermally conducting material may be configured for transferring heat generated by a light emitter away from the light emitter. For example, the thermally conducting material may comprise at least one composite material. For example, the thermally conducting material may comprise a first material in a first region closer to the light emitter having greater thermal conductivity than in a second, peripheral region surrounding the first region. The light emitter structure may be mounted on the thermally conducting material.

The first array 120 may be mounted on the first base 132 and the second array 122 may be mounted on the second base 134. The second base 134 may be tilted with respect to the first base 132. For example, as shown in Figures 3A and 3B, the first array 120 is oriented in direction of an optical axis of the optical element 114 and the second array 122 is oriented perpendicular to the first array 120. Thus, for example, the first array 120 may be a horizontal array and the second array 122 may be a vertical array. Both the horizontal and the vertical array can fulfill either role by switching the distances of the optical path.

The optical element 114 may comprise one or more of at least one refractive lens, at least one system of refractive lenses, at least one diffractive optical element (DOE), at least one meta lens. For example, the optical element 114 may be at least one projector lens, e.g. a single projector lens or a lens system, e.g. a projector optics. The optical element 114 may comprise at least one refractive optical element, or at least one diffractive optical element or at least one diffractive element in combination with a refractive optical element or it could be an integrated diffractive-refractive optical element. At least one microlens array may also be a possible choice.

For example, the optical element 114 may comprise at least one diffractive optical element (DOE) and/or at least one metasurface element. The DOE and/or the metasurface element may be configured for generating multiple light beams from a single incoming light beam. For example, a VCSEL projecting up to 2000 spots and an optical element comprising a plurality of metasurface elements may be used to duplicate the number of spots. Further arrangements, particularly comprising a different number of projecting VCSEL and/or at least one different optical element configured for increasing the number of spots may be possible. Other multiplication factors are possible. For example, a VCSEL or a plurality of VCSELs may be used and the generated laser spots may be duplicated by using at least one DOE.

The optical element 114 is configured for collimating and/or replicating light. In Figures 3A and 3B, an effective optical path length of the first array 120 to the optical element 114 is chosen to match the back focal length BFL of the optical element 114, to collimate the array cavities and producing a the light pattern. The effective optical path length of the second array 122 to the optical element 114 is chosen with an offset to the back focal length BFL of the optical element 114, producing a flood illumination by defocusing. In Figures 3A and 3B, a back focal plane 130 is illustrated. The first array 120 lies within this back focal plane 130, but the second array 122 is positioned with an offset to the back focal plane 130. Both the arrays can fulfill either role by switching the distances of the optical path.

The polarization-sensitive beam splitter 116 may be configured for splitting the incident light with respect to its polarization. For example, the polarization-sensitive beam splitter 116 may be configured for transmitting light of a first polarization and for reflecting light having a second polarization, different from the first polarization. The beam splitter 116 may be cube beam splitter as shown in Figures 3A and 3B.

In the embodiments shown in Figures 3A and 3B, the optoelectronic apparatus 112 may be a projector comprising of two VCSEL arrays. One VCSEL array is mounted on the first base 132 and the other VCSEL array is mounted on the second base 134 and tilted 90°. The light emission of both VCSEL arrays is polarized. All emitter cavities on one array emit with the same polarization. Moreover, the projector comprises a system of optical elements 114, e.g, refractive lenses only, refractive lenses combined with diffractive optical elements (DOE), DOE, metal lenses. The projector also comprises of the polarization-sensitive beam splitter 116. This beam splitter 116 allows for that the illumination paths of both VCSEL arrays can be directed to the same system of optical elements 114. For this, the arrays need to be oriented so that their polarization directions match with the beam splitter's polarization dependence in the following way: Light from the first VCSEL array passes through the beam splitter 116 unaltered, without reflection, to the system of optical elements 114 and light from the second VCSEL array gets reflected by the beam splitter 116 towards the system of optical elements 114. The effective optical path length from one VCSEL array to the system of optical elements 114 is chosen to match the back focal length BFL of the system of optical elements 114, to collimate the array cavities, producing a dot pattern. The effective optical path length of the other VCSEL array to the system of optical elements 114 is chosen with an offset to the back focal length BFL of the system of optical elements 114, producing a flood illumination by defocusing. Both the horizontal and the vertical VCSEL array can fulfill either role by switching the distances of the optical path. Figure 3A shows, polarized emission from VCSEL 1, lying in the back focal plane BFL of the system of optical elements 114, passes through the polarization sensitive beam splitter 116 unaltered, producing a dot pattern. Figure 3B shows, rotated polarized emission from VCSEL 2, lying outside the back focal plane BFL of the system of optical elements 114, gets reflected in the polarization sensitive beam splitter 116 towards the system of optical elements 114, producing a flood illumination.

Back to Figure 1, the device 110 may comprise a display 136 and the infrared light pattern traverses the display 136 while being illuminated from the pattern illumination source 124 and/or the infrared flood light traverses the display 136 while being illuminated from the flood illumination source 126. The display 136 may be a front display of the device 110. The display 136 may be or may comprise at least one organic light-emitting diode (OLED) display.

The device 110 comprises at least one image generation unit 138 configured for generating at least one pattern image while the pattern illumination source 124 is emitting the infrared light pattern and configured for generating at least one flood image while the flood illumination source 126 is emitting infrared flood light. The image generation unit 138 may comprise at least one optical sensor, in particular at least one pixelated optical sensor. The image generation unit 138 may comprise at least one CMOS sensor or at least one CCD chip.

The device 110 at least one authentication unit 140 configured for performing at least one authentication process of a user using the flood image and the pattern image. The authentication unit 140 may comprise at least one processor.

The authenticating may comprise verifying an identity of a user. Specifically, the authentication may comprise distinguishing between the user from other humans or objects, in particular between an authorized access from a non-authorized access. The authentication may comprise verifying identity of a respective user and/or assigning identity to a user. The authentication may comprise generating and/or providing identity information, e.g. to other devices or units such as to at least one authorization unit for authorization for providing access to the device. The identify information may be proofed by the authentication. For example, the identity information may be and/or may comprise at least one identity token. In case of successful authentication an image of a face recorded by at least one image generation unit may be verified to be an image of the user's face and/or the identity of the user is verified. The authenticating may be performed using at least one authentication process. The authentication process may comprise a plurality of steps such as at least one face detection, e.g. on at least one flood image as will be described in more detail below, and at least one identification step in which an identity is assigned to the detected face and/or at least one identity check and/or verifying an identity of the user is performed.

For example, the authentication unit 140 may perform at least one face detection using the flood image. The authentication unit 140 may be configured for identifying the user based on the flood image. The authentication may comprise a plurality of steps.

For example, the authentication may comprise performing at least one face detection using the flood image. The face detection may comprise analyzing the flood image. In particular, the analyzing of the flood image may comprise using at least one image recognition technique, in particular a face recognition technique. An image recognition technique comprises at least one process of identifying the user in an image. The image recognition may comprise using at least one technique selected from the technique consisting of: color-based image recognition, e.g. using features such as template matching; segmentation and/or blob analysis e.g. using size, or shape; machine learning and/or deep learning e.g. using at least one convolutional neural network.

For example, the authentication may comprise identifying the user. The identifying may comprise assigning an identity to a detected face and/or at least one identity check and/or verifying an identity of the user. The identifying may comprise performing a face verification of the imaged face to be the user's face. The identifying the user may comprise matching the flood image, e.g. showing a contour of parts of the user, in particular parts of the user's face, with a template, e.g. a template image generated within an enrollment process. The identifying of the user may comprise determining if the imaged face is the face of the user, in particular if the imaged face corresponds to at least one image of the user's face stored in at least one memory, e.g. of the device. Authentication may be successful if the flood image can be matched with an image template. Authentication may be unsuccessful if the flood image cannot be matched with an image template.

For example, the identifying of the user may comprise determining a plurality of facial features. The analyzing may comprise comparing, in particular matching, the determined facial features with template features. The template features may be features extracted from at least one template. The template may be or may comprise at least one image generated in an enrollment process, e.g. when initializing the device. Template may be an image of an authorized user. The template features and/or the facial feature may comprise a vector. Matching of the features may comprise determining a distance between the vectors. The identifying of the user may comprise comparing the distance of the vectors to a least one predefined limit. The user may be successfully identified in case the distance is ≤ the predefined limit at least within tolerances. The user may be declined and/or rejected otherwise.

For example, the image recognition may comprise using at least one model, in particular a trained model comprising at least one face recognition model. The analyzing of the flood image may be performed by using a face recognition system, such as FaceNet, e.g. as described in Florian Schroff, Dmitry Kalenichenko, James Philbin, "FaceNet: A Unified Embedding for Face Recognition and Clustering", arXiv:1503.03832. The trained model may comprise at least one convolutional neural network. For example, the convolutional neural network may be designed as described in M. D. Zeiler and R. Fergus, "Visualizing and understanding convolutional networks", CoRR, abs/1311.2901, 2013, or C. Szegedy et al., "Going deeper with convolutions", CoRR, abs/1409.4842, 2014. For more details with respect to convolutional neural network for the face recognition system reference is made to Florian Schroff, Dmitry Kalenichenko, James Philbin, "FaceNet: A Unified Embedding for Face Recognition and Clustering", arXiv: 1503.03832. As training data labelled image data from an image database may be used. Specifically, labeled faces may be used from one or more of G. B. Huang, M. Ramesh, T. Berg, and E. Learned-Miller, "Labeled faces in the wild: A database for studying face recognition in unconstrained environments", Technical Report 07-49, University of Massachusetts, Amherst, October 2007, the Youtube® Faces Database as described in L. Wolf, T. Hassner, and I. Maoz, "Face recognition in unconstrained videos with matched background similarity", in IEEE Conf. on CVPR, 2011, or Google® Facial Expression Comparison dataset. The training of the convolutional neural network may be performed as described in Florian Schroff, Dmitry Kalenichenko, James Philbin, "FaceNet: A Unified Embedding for Face Recognition and Clustering", arXiv: 1503.03832.

The authentication unit 140 may be further configured for considering additional security features extracted from the pattern image. In particular, the authentication unit 140 may be further configured for extracting material data from the pattern image. The authentication unit 140 may be configured for authenticating the user in case the user can be identified and/or if the material data matches the desired material data. The authentication may comprise using even further security features such as a three-dimensional information and/or further liveness data.

The authentication 140 may comprise using even further security features such as a three-dimensional information and/or further liveness data.

For example, the three-dimensional information, such a longitudinal coordinate z of one or more points on the user's face, may be determined using to beam profile analysis, e.g. as described in WO 2018/091640 A1, the full content of which is included by reference. For example, the authentication unit 140 may be configured for determining the at least one longitudinal coordinate z by evaluating a quotient signal Q from sensor signals detected by the image generation unit 138. The quotient signal Q may be generated by combining the sensor signals, in particular by one or more of dividing the sensor signals, dividing multiples of the sensor signals or dividing linear combinations of the sensor signals. The authentication unit 140 may be configured for using at least one predetermined relationship between the quotient signal Q and the longitudinal coordinate z for determining the longitudinal coordinate. For example, the authentication unit 140 is configured for deriving the quotient signal Q by

$$Q(z_O) = \frac{\iint\limits_{A_1} E(x, y; z_O) dx dy}{\iint\limits_{A_2} E(x, y; z_O) dx dy}$$

wherein x and y are transversal coordinates, A1 and A2 are areas of the beam profile at the sensor position, and $E(x,y,z_O)$ denotes the beam profile given at the object distance $z_O$. Area A1 and area A2 may differ. In particular, A1 and A2 are not congruent. Thus, A1 and A2 may differ in one or more of the shape or content. With respect to further details on determining the longitudinal coordinate z using beam profile analysis reference is made to WO 2018/091640 A1, the full content of which is included by reference.

The authentication unit 140 may be configured for determining the longitudinal coordinate z at a plurality of positions of the user's face and for determining a depth map. The determined depth map may be compared to a predetermined depth map of the user, e.g. determined during an enrollment process. The authentication unit 140 may be configured for authenticating the user in case the determined depth map matches with the predetermined depth map of the user, in particular at least within tolerances. Otherwise, the user may be declined.

The device 110 may comprise at least one authorization unit, in Figure 1 designed integral with the authentication unit 140, configured for allowing the user to perform at least one operation on the device 110, e.g. unlocking the device 110, in case of successful authentication of the user or declining the user to perform at least one operation on the device 110 in case of non-successful authentication. Thereby, the user may become aware of the result of the authentication. The authorization unit may be configured for allowing or declining the user to perform at least one operation on the device that requires authentication based on the material data and the identifying using the flood image. The authorization unit may be configured for allowing or declining the user to access one or more functions associated with the device depending on the authentication or denial. The allowing may comprise granting permission to access the one or more functions. The authorization unit may be configured for determining if the user correspond to an authorized user, wherein allowing or declining is further based on determining if the user corresponds to an authorized user. The authorization may comprise assigning access rights to the user, in particular a selective permission or selective restriction of access to the device 110 and/or at least one resource of the device 110. The authorization unit may be configured for access control. The authorization unit may comprise at least one processor or may be designed as software or application. The authorization unit and the authentication unit may be embodied integral, e.g. by using the same processor. The authorization unit may be configured for allowing the user to access the one or more functions, e.g. on the device, e.g. unlocking the device 110, in case of successful authentication of the user or declining the user to access the one or more functions, e.g. on the device 110, in case of non-successful authentication.

The device 110 e.g. by using the display 136 may be configured for displaying a result of the authentication and/or the authorization e.g. by using at least one communication interface such as a user interface, e.g. a display.

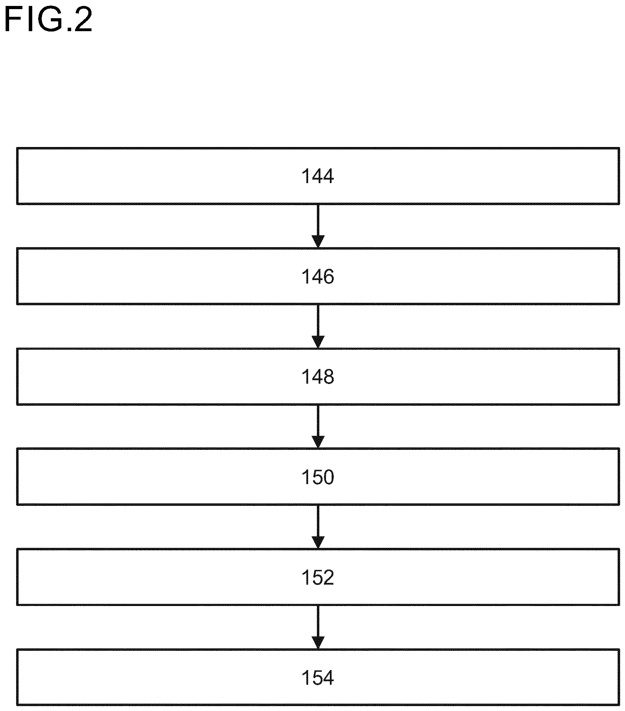

In Figure 2 a method for authenticating a user of a device 110, in particular device 110 as described with respect to Figures 1 and 3A, 3B, to perform at least one operation on the device 110 that requires authentication. The method comprises:

- (144) illuminating the user with the infrared light pattern from the pattern illumination source 124,
- (146) illuminating the user with infrared flood light from the flood illumination source 126,
- (148) generating at least one pattern image with the image generation unit 138 showing at least a part of the user while the user is being illuminated with the infrared light pattern, and generating at least one flood image with the image generation unit 138 showing at least a part of the user while the user is being illuminated with the infrared flood light,
- (150) identifying the user based on the flood image,
- (152) extracting at least one security feature from the at least one pattern image; and
- (154) allowing or declining the user to perform at least one operation on the device 110 that requires authentication based on the security feature and the identifying.

The method steps may be performed in the given order or may be performed in a different order. Further, one or more additional method steps may be present which are not listed. Further, one, more than one or even all of the method steps may be performed repeatedly.

The extracting of the security feature comprise extracting material data from the at least one pattern image. The method may comprise allowing or declining the user to perform at least one operation on the device that requires authentication based on the material data and the identifying and/or even further security features such as a three-dimensional information and/or further liveness data.

List of reference numbers

**[0183]**

| 110 | device |
| 112 | optoelectronic apparatus |
| 114 | optical element |
| 116 | beam splitter |
| 118 | light emitter structure |
| 120 | first array |
| 122 | second array |
| 124 | pattern light source |
| 126 | flood light source |
| 128 | reflection plane |
| 130 | back focal plane |
| 132 | first base |
| 134 | second base |
| 136 | display |
| 138 | image generation unit |
| 140 | authentication unit |
| 144 | illuminating the user with the infrared light pattern |
| 146 | illuminating the user with infrared flood light |
| 148 | generating at least one pattern image and flood image |
| 150 | identifying the user |
| 152 | extracting at least one security feature |
| 154 | allowing or declining the user to perform at least one operation on the device |

Claims

1. An optoelectronic apparatus (112) configured for emitting at least one infrared light pattern comprising a plurality of infrared light beams and for emitting infrared flood light, comprising:

    - at least one refractive and/or diffractive optical element (114);
    - at least one polarization-sensitive beam splitter (116);
    - at least one light emitter structure (118) comprising at least one first array (120) of light emitters and at least one second array (122)

of light emitters, wherein the first array (120) is configured for emitting light with a first polarization and the second array (122) is configured for emitting light with a second polarization, different from the first polarization,
- at least two illumination paths comprising a light pattern illumination path and a flood light illumination path,

wherein the light pattern illumination path comprises a pattern light source (124) comprising one of the first array (120) or the second array (122), wherein the pattern light source (124) is arranged at a back focal length of the optical element (114), wherein the optical element (114) is configured for collimating and/or replicating light from the pattern light source (124), thereby forming the pattern light source (124) configured for emitting the infrared light pattern,
wherein the flood light illumination paths comprises a flood light source (126) comprising the other one of the first array (120) or the second array (122), wherein the flood light source (126) is arranged with an offset to the back focal length of the optical element (114), wherein the optical element (114) is configured for defocusing light from the flood light source (126), thereby forming the flood light source configured for emitting the infrared flood light,
wherein a reflection plane of the beam splitter (116) is oriented such that light emitted from one of the pattern light source (124) or the flood light source (126) passes through the beam splitter (116) unaltered to the optical element (114) and that light emitted from the other one of the pattern light source (124) or the flood light source (126) gets reflected towards the optical element (114).

2. The optoelectronic apparatus (112) according to claim 1, wherein the first array (120) is oriented in direction of an optical axis of the optical element (114), wherein the second array (122) is oriented perpendicular to the first array (120).

3. The optoelectronic apparatus (112) according to any one of the preceding claims, wherein the optoelectronic apparatus (112) is comprised in a device (110), wherein the device (110) comprises a display (136) and the infrared light pattern traverses the display (136) while being illuminated from the pattern light source (124) and/or the infrared flood light traverses the display (136) while being illuminated from the flood light source (126), wherein the display (136) of the device (110) is at least partially transparent in at least one continuous area covering the pattern light source (124) and the flood light source (126).

4. The optoelectronic apparatus (112) according to the preceding claim, wherein the device (110) is selected from the group consisting of: a television device; a game console; a personal computer; a mobile device, particularly a cell phone, and/or a smart phone, and/or, and/or a tablet computer, and/or a laptop, and/or a tablet, and/or a virtual reality device, and/or a wearable, such as a smart watch; or another type of portable computer; at least one access control device such as a kiosk, a door access device, a car access device; at least one in-car display.

5. The optoelectronic apparatus (112) according to any one of the two preceding claims, wherein the device (110) comprises at least one image generation unit (138) configured for generating at least one pattern image while the pattern light source (124) is emitting the infrared light pattern and configured for generating at least one flood image while the flood light source (126) is emitting infrared flood light, wherein the light emitters of the pattern light source (124) and the light emitters of the flood light source (126) are arranged at the optical center of the image generation unit (138).

6. The optoelectronic apparatus (112) according to any one of the preceding claims, wherein each of the light emitters comprise at least one vertical cavity surface-emitting laser (VCSEL), and/or wherein the light emitters are configured for emitting light in the near infrared spectral range, preferably a wavelength of the emitted light is from 760 nm to 1.5 $\mu$m, preferably 940 nm, 1140 nm or 1320 to 1380 nm.

7. The optoelectronic apparatus (112) according to any one of the preceding claims, wherein the first array (120) is mounted on a first base (132) and the second array (122) is mounted on a second base (134) tilted with respect to the first base (132), wherein the first base (132) and second base (134) comprise at least one thermally conducting material.

8. The optoelectronic apparatus (112) according to any one of the preceding claims, wherein all light emitter cavities of one array (120, 122) emit with the same polarization.

9. The optoelectronic apparatus (112) according to any one of the preceding claims, wherein the optical element (114) comprises one or more of at least one refractive lens, at least one system of refractive lenses, at least one diffractive optical element (DOE), at least one meta lens.

10. Use of an optoelectronic apparatus (112) according to any of the preceding claims for authenticating a user of a device comprising the apparatus (112).

11. A device for authenticating a user of a device to perform at least one operation on the device that requires authentication, the device comprising:

- an optoelectronic apparatus (112) according to any of the preceding claims referring to an optoelectronic apparatus;
- at least one image generation unit (138) configured for generating at least one pattern image while the pattern light source (124) is emitting the infrared light pattern and configured for generating at least one flood image while the flood light source (126) is emitting infrared flood light;
- at least one display (136), wherein the infrared light pattern traverses the display (136) while being illuminated from the pattern light source (124) and/or the infrared flood light traverses the display while being illuminated from the flood light source (126), wherein the display (136) of the device (110) is at least partially transparent in at least one continuous area covering the pattern light source (124), the flood light source (126) and/or the image generation unit (138),
- at least one authentication unit (140) configured for performing at least one authentication process of a user using the flood image and the pattern image.

12. A method for authenticating a user of a device (110) to perform at least one operation on the device (110) that requires authentication, wherein the device (110) is a device according to the preceding claim, and the method comprising:

- (144) illuminating the user with the infrared light pattern from the pattern light source (124),
- (146) illuminating the user with infrared flood light from the flood light source (126),
- (148) generating at least one pattern image with the image generation unit (138) showing at least a part of the user while the user is being illuminated with the infrared light pattern, and generating at least one flood image with the image generation unit (138) showing at least a part of the user while the user is being illuminated with the infrared flood light,
- (150) identifying the user based on the flood image,
- (152) extracting at least one security feature from the at least one pattern image; and
- (154) allowing or declining the user to perform at least one operation on the device that requires authentication based on the security feature and the identifying.

13. A computer program comprising instructions which, when the program is executed by the device (110) according to claim 11, cause the device (110) to perform the method according to the preceding claim.

14. A computer-readable storage medium comprising instructions which, when the instructions are executed by the device (110) according to claim 11, cause the device (110) to perform the method according to claim 12.

15. A non-transient computer-readable medium including instructions that, when executed by one or more processors, cause the one or more processors to perform the method according to claim 12.

# FIG.1

FIG.2

```
┌─────────────────────────────────────────────┐
│                    144                        │
└─────────────────────────────────────────────┘
                       │
                       ▼
┌─────────────────────────────────────────────┐
│                    146                        │
└─────────────────────────────────────────────┘
                       │
                       ▼
┌─────────────────────────────────────────────┐
│                    148                        │
└─────────────────────────────────────────────┘
                       │
                       ▼
┌─────────────────────────────────────────────┐
│                    150                        │
└─────────────────────────────────────────────┘
                       │
                       ▼
┌─────────────────────────────────────────────┐
│                    152                        │
└─────────────────────────────────────────────┘
                       │
                       ▼
┌─────────────────────────────────────────────┐
│                    154                        │
└─────────────────────────────────────────────┘
```

# FIG.3A

# FIG.3B

Europäisches
Patentamt

European
Patent Office

Office européen
des brevets

# EUROPEAN SEARCH REPORT

**Application Number**

EP 23 20 0922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 6 970376 B2 (OMRON TATEISI ELECTRONICS CO) 24 November 2021 (2021-11-24) * paragraph [0085] - paragraph [0087]; figure 5 * | 1-15 | INV. G01S7/481 G06V10/145 G01B11/25 |
| A | US 11 710 945 B2 (APPLE INC [US]) 25 July 2023 (2023-07-25) * figures 1, 2A, 2B * | 1-15 | |
| A | US 2023/220974 A1 (EILERTSEN JAMES [DK] ET AL) 13 July 2023 (2023-07-13) * figure 1 * | 1-15 | |
| A | WO 2021/259923 A1 (TRINAMIX GMBH [DE]) 30 December 2021 (2021-12-30) * figures 1, 2A, 2B * | 1-15 | |

**TECHNICAL FIELDS SEARCHED    (IPC)**

G01B

The present search report has been drawn up for all claims

| Place of search | Date of completion of the search | Examiner |
|---|---|---|
| Munich | 1 March 2024 | Malcoci, Andrei |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

**EP 23 20 0922**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-03-2024**

| Patent document cited in search report | | Publication date | Patent family member(s) | | Publication date |
|---|---|---|---|---|---|
| JP 6970376 | B2 | 24-11-2021 | CN | 109872382 A | 11-06-2019 |
| | | | EP | 3492861 A1 | 05-06-2019 |
| | | | JP | 6970376 B2 | 24-11-2021 |
| | | | JP | 2019100852 A | 24-06-2019 |
| | | | US | 2019170506 A1 | 06-06-2019 |
| US 11710945 | B2 | 25-07-2023 | CN | 113725722 A | 30-11-2021 |
| | | | EP | 3916344 A1 | 01-12-2021 |
| | | | US | 2021364902 A1 | 25-11-2021 |
| US 2023220974 | A1 | 13-07-2023 | EP | 4204759 A1 | 05-07-2023 |
| | | | US | 2023220974 A1 | 13-07-2023 |
| | | | WO | 2022043202 A1 | 03-03-2022 |
| WO 2021259923 | A1 | 30-12-2021 | CN | 115769258 A | 07-03-2023 |
| | | | EP | 4168986 A1 | 26-04-2023 |
| | | | JP | 2023532676 A | 31-07-2023 |
| | | | KR | 20230028303 A | 28-02-2023 |
| | | | US | 2023288193 A1 | 14-09-2023 |
| | | | WO | 2021259923 A1 | 30-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018091649 A1
- WO 2018091638 A1

- WO 2018091640 A1

**Non-patent literature cited in the description**

- **FLORIAN SCHROFF** ; **DMITRY KALENICHENKO** ; **JAMES PHILBIN**. FaceNet: A Unified Embedding for Face Recognition and Clustering. *arXiv:1503.03832*
- **M. D. ZEILER** ; **R. FERGUS**. Visualizing and understanding convolutional networks. *CoRR, abs/1311.2901*, 2013
- **C. SZEGEDY et al.** Going deeper with convolutions. *CoRR, abs/1409.4842*, 2014
- **FLORIAN SCHROFF** ; **DMITRY KALENICHENKO** ; **JAMES PHILBIN**. FaceNet: A Unified Embedding for Face Recognition and Clustering. *arXiv: 1503.03832*

- Labeled faces in the wild: A database for studying face recognition in unconstrained environments. **G. B. HUANG** ; **M. RAMESH** ; **T. BERG** ; **E. LEARNED-MILLER**. Technical Report 07-49. University of Massachusetts, October 2007
- **L. WOLF** ; **T. HASSNER** ; **I. MAOZ**. Face recognition in unconstrained videos with matched background similarity. *IEEE Conf. on CVPR*, 2011
- **L. WOLF, T. HASSNER** ; **I. MAOZ**. Face recognition in unconstrained videos with matched background similarity. *IEEE Conf. on CVPR*, 2011